# EUROPEAN PATENT SPECIFICATION

(11) **EP 2 629 530 B1**
(45) Date of publication and mention of the grant of the patent: **07.09.2016**
(21) Application number: 11832792.3
(22) Date of filing: 17.10.2011
(51) Int. Cl.: H04N 13/00, H04N 5/76, H04N 13/04, H04N 21/2343, H04N 21/241, H04N 21/4147, H04N 21/658

(54) **DIGITAL RECEIVER AND METHOD FOR PROCESSING 3D CONTENTS IN DIGITAL RECEIVER**
DIGITALER EMPFÄNGER UND VERFAHREN ZUR VERARBEITUNG VON 3D-INHALTEN IN DEM DIGITALEN EMPFÄNGER
RÉCEPTEUR NUMÉRIQUE ET PROCÉDÉ PERMETTANT DE TRAITER LE CONTENU 3D D'UN RÉCEPTEUR NUMÉRIQUE

(30) Priority: 16.10.2010 US 393876 P
(43) Date of publication of application: 21.08.2013
(73) Proprietor: LG Electronics Inc., Yeongdeungpo-gu Seoul 150-721 (KR)
(72) Inventor: SUH, Jongyeul, Seoul 137-724 (KR); CHOE, Jeehyun, Seoul 137-724 (KR); KIM, Jinpil, Seoul 137-724 (KR); LEE, Joonhui, Seoul 137-724 (KR)
(74) Representative: Katérle, Axel
(86) International application number: PCT/KR2011/007700
(87) International publication number: WO 2012/050405

(56) References cited:
- EP-A1- 2 190 202
- JP-A- 2009 248 182
- KR-A- 20040 025 444
- KR-A- 20090 006 915
- KR-A- 20100 084 985
- US-A- 5 844 478
- US-A1- 2004 228 413
- US-A1- 2008 115 175
- US-A1- 2010 215 338
- US-A1- 2010 260 484

## Description

### [Technical Field]

The present invention relates to a digital receiver and a processing method thereof, and more particularly, to a digital receiver that process 3-dimensional (hereinafter, referred to as '3D') content and a processing method thereof. The digital receiver may include a Personal Video Recorder (PVR). The PVR may store or reproduce 3D content.

### [Background Art]

In the recent broadcasting environment, analog broadcasting has been switched to digital broadcasting all over the world.

With introduction of the digital broadcasting, various content has been developed and distributed as compared with the conventional analog broadcasting. Also, various digital broadcasting technologies enabling users to more easily and conveniently use such content have been developed.

As an example, most conventional content has been produced for a 2D mode. With introduction of the digital broadcasting, however, interest in 3D content having reality and a stereoscopic effect as compared with conventional 2D content has been increased, and therefore, such content has been developed and distributed. In addition, much research has been conducted into processing, such as storage and reproduction, of 3D content in a digital receiver.

Although analog broadcasting has been switched to digital broadcasting in the recent broadcasting environment, on the other hand, 2D content and 3D content may be provided together even in the digital broadcasting environment. For this reason, it is necessary for the digital receiver to properly process content in consideration of such circumstances. However, the digital receiver has difficulty in processing 3D content when considering such circumstances and user interest in 3D content. Also, the digital receiver is still defective in switching between 2D and 3D, resulting in user inconvenience.

### [Disclosure]

### [Technical Problem]

The present invention has been made in view of the above problems, and an object of the present invention is to provide a digital receiver, including a PVR, which supports various functions, such as 2D/3D switching and view switching, when 3D content is processed by the digital receiver and a method of processing content in the digital receiver.

Another object of the present invention is to provide a digital receiver capable of effectively supporting PVR functions for 3D streams to realize Full Resolution Per Eye, not frame compatible, and a method of processing content in the digital receiver.

### [Technical Solution]

In order to accomplish the above objects, the present invention is configured as follows.

An example of a method of processing a digital broadcast signal for a 3-dimensional (3D) service according to the present invention includes receiving a 3D video elementary stream and system information including 3D personal video recorder (PVR) support information of the 3D video elementary stream, adding a time stamp to the 3D video elementary stream and storing the 3D video elementary stream having the time stamp added thereto, storing an index file including information for execution of a 3D PVR function of the 3D video elementary stream extracted from the 3D PVR support information, decoding the stored 3D video elementary stream based on the index file and/or a time stamp value, and formatting the decoded 3D video data according to an output format and outputting the formatted 3D video data.

The index file may include at least one selected from among L/R of a corresponding packet, a base/enhancement layer, picture type information indicating a random access point (RAP), picture number information regarding picture numbers, address information indicating a logical or physical address in a storage device, and size information indicating size of a corresponding picture.

The 3D video elementary stream may be a dual video stream including a base layer video stream and an enhancement layer video stream.

Also, the 3D PVR support information may include at least one selected from among information (Picture_start _end) indicating whether a corresponding transport stream packet includes a start point or an end point of each video picture, information indicating whether a video elementary stream contained in the corresponding transport stream packet is an RAP, information indicating whether a corresponding picture is a base layer or an enhancement layer in connection with a coding mode, and information indicating whether the corresponding picture is a left view or a right view.

The 3D PVR support information may further include frame information indicating numbers sequentially assigned to pictures of a program on the basis of a first picture of the program and frame type information identifying whether the frame information is based on decoding order or display order.

Also, the frame information may include picture pairs, numbers of which are independently assigned for a base/extended layer and left/right and which have the same numbers for the base/extended layer and the left/right.

The 3D PVR support information may further include times speed information, and the times speed information may include information indicating whether 2D normal times speed reproduction using a corresponding picture is possible, information indicating whether 3D normal times speed reproduction using a corresponding picture is possible, information indicating whether n times speed reproduction using a corresponding picture in a 2D mode is possible, and information indicating whether n times speed reproduction using a corresponding picture in a 3D mode is possible.

Also, the 3D PVR support information may be contained in adaptation_field of a transport stream packet including a first byte or a last byte of each picture among transport stream packets corresponding to a 3D or 2D program. The 3D PVR support information may be transmitted through private data byte of the adaptation_field.

The system information may further include identification information identifying whether the 3D PVR support information is present, and the identification information may be transmitted while being contained in any one selected from among a program map table (PMT) of program specific information (PSI), a terrestrial virtual channel table (TVCT) and/or event information table (EIT) of program and system information protocol (PSIP), and a service description table (SDT) and/or EIT of digital video broadcasting (DVB).

An example of a digital receiver for a 3D service includes a receiving part to receive a 3D video elementary stream and system information including 3D PVR support information of the 3D video elementary stream, a PVR module including a download module to add a time stamp to the 3D video elementary stream and control an index file including information for execution of a 3D PVR function of the 3D video elementary stream extracted from the 3D PVR support information to be configured and stored and an upload module to upload the stored 3D video elementary stream based on the index file and/or a time stamp value, a decoder to decode the uploaded 3D video elementary stream, a formatter to format the decoded 3D video data according to an output format, and an output part to output the formatted 3D video data.

The index file of the PVR module may include at least one selected from among L/R of a corresponding packet, a base/enhancement layer, picture type information indicating a random access point (RAP), picture number information regarding picture numbers, address information indicating a logical or physical address in a storage device, and size information indicating size of a corresponding picture.

The 3D video elementary stream may be a dual video stream including a base layer video stream and an enhancement layer video stream.

The 3D PVR support information may include at least one selected from among information (Picture_start_end) indicating whether a corresponding transport stream packet includes a start point or an end point of each video picture, information indicating whether a video elementary stream contained in the corresponding transport stream packet is an RAP, information indicating whether a corresponding picture is a base layer or an enhancement layer in connection with a coding mode, and information indicating whether the corresponding picture is a left view or a right view.

The 3D PVR support information may further include frame information indicating numbers sequentially assigned to pictures of a program on the basis of a first picture of the program and frame type information identifying whether the frame information is based on decoding order or display order.

The frame information may include picture pairs, numbers of which are independently assigned for a base/extended layer and left/right and which have the same numbers for the base/extended layer and the left/right.

The 3D PVR support information may further include times speed information, and the times speed information may include information indicating whether 2D normal times speed reproduction using a corresponding picture is possible, information indicating whether 3D normal times speed reproduction using a corresponding picture is possible, information indicating whether n times speed reproduction using a corresponding picture in a 2D mode is possible, and information indicating whether n times speed reproduction using a corresponding picture in a 3D mode is possible.

The 3D PVR support information may be contained in adaptation_field of a transport stream packet including a first byte or a last byte of each picture among transport stream packets corresponding to a 3D or 2D program. The 3D PVR support information may be transmitted through private data byte of the adaptation_field.

The system information may further include identification information identifying whether the 3D PVR support information is present, and the identification information may be transmitted while being contained in any one selected from among a PMT of PSI, a TVCT and/or EIT of PSIP, and an SDT and/or EIT of DVB.

### [Advantageous Effects]

The present invention has the following effects.

First, the present invention has an effect in that a digital receiver provides various PVR functions for even 3D content.

Second, the present invention has an effect in that the digital receiver effectively supports various PVR functions for even 3D streams to realize Full Resolution Per Eye.

Third, the present invention has an effect in that the digital receiver smoothly performs trick play and 2D/3D switching with respect to 3D content using a PVR of the digital receiver.

### [Description of Drawings]

FIG. 1 is a block diagram illustrating an example of configuration of a digital receiver including a 3D PVR module according to the present invention;
FIG. 2 is a block diagram illustrating an example of configuration of the 3D PVR module of FIG. 1;
FIG. 3 is a view illustrating an example of a 3D_PVR_Information_byte() bitstream syntax according to the present invention;
FIG. 4 is a view illustrating an example of a PMT table section bitstream syntax including PVR support information according to the present invention;
FIG. 5 is a view illustrating an example of an adaptation_field_data_descriptor bitstream syntax according to the present invention;
FIG. 6 is a view illustrating an example of an adaptation_field_data_identifier of FIG. 5;
FIG. 7 is a view illustrating an example of an adaptation_field of an MPEG-2 transport stream packet including 3D PVR support information according to the present invention;
FIG. 8 is a view illustrating an example of a TVCT table section bitstream syntax including PVR support information according to the present invention;
FIG. 9 is a view illustrating an example of a channel_level_descriptor bitstream syntax according to the present invention;
FIG. 10 is a view illustrating an example of an EIT table section bitstream syntax including PVR support information according to the present invention;
FIG. 11 is a view illustrating an example of a Service Description Table (SDT) table section bitstream syntax including PVR support information according to the present invention;
FIG. 12 is a view illustrating another example of an EIT table section bitstream syntax including PVR support information according to the present invention;
FIG. 13 is a block diagram illustrating an example of configuration of a download module 212 included in the 3D PVR module 110 of FIG. 2;
FIGs. 14 to 16 are views illustrating an example of time stamp insertion realization in the download module according to the present invention;
FIG. 17 is a view illustrating an example of a time stamp index data structure at the time of using a time stamp according to the present invention;
FIG. 18 is a view illustrating an example of index configuration in the download module 212 according to the present invention;
FIG. 19 is a conceptual view illustrating a concept of a prediction chain for fast play support according to the present invention;
FIG. 20 is a view showing an example of a packet for picture data stored according to the present invention and configuration of storage device address mapping information;
FIG. 21 is a view illustrating an example of configuration of a fast play command chain table for fast play mode support according to the present invention;
FIG. 22 is a view illustrating an example of an index file structure to perform a 3D PVR function using the information of FIGs. 19 to 21 according to the present invention;
FIG. 23 is a block diagram illustrating an example of configuration of an upload module 218 included in the 3D PVR module of FIG. 2 according to the present invention;
FIG. 24 is a flowchart illustrating an example of an operation of the receiver at the time of 2D/3D recording according to the present invention;
FIG. 25 is a flowchart illustrating an example of an operation of the receiver at the time of 2D mode reproduction according to the present invention;
FIG. 26 is a flowchart illustrating an example of an operation of the receiver at the time of 3D mode reproduction according to the present invention; and
FIG. 27 is a flowchart illustrating an example of an operation of the receiver at the time of view switching request according to the present invention.

### [Best Mode]

Now, the present invention will be described in detail with reference to the accompanying drawings.

In the following description, a suffix "module" or "part" contained in terms of constituent elements to be described will be selected or used together in consideration only of the convenience of writing the following specification, and the suffixes "module" and "part" do not necessarily have different meanings or roles.

Furthermore, reference will now be made in detail to the preferred embodiments of the present invention, examples of which are illustrated in the accompanying drawings. It should be noted herein that these embodiments are only for illustrative purposes and the protection scope of the invention is not limited or restricted thereto.

Terms used in this specification are general terms selected in consideration of function and widely used at the present time. However, such terms may vary depending upon intentions of those skilled in the art to which the present invention pertains, usual practices, or appearance of new technology. In a specific case, some terms may be selected by the applicant of the present application. In this case, meanings of such terms will be described in corresponding paragraphs of the specification. Therefore, it should be noted that terms used in this specification be interpreted based on real meanings of the terms and the disclosure of the present invention, not simple dictionary definition of the terms.

The present invention relates to a digital receiver capable of outputting 3-dimensional (hereinafter, referred to as '3D') content. The digital receiver includes a Personal Video Recorder (PVR). More particularly, the present invention relates to a device and method for processing various functions of the PVR such that the functions of the PVR are applied to 3D content. For example, in this specification, 3D content is stored and reproduced through the PVR of the digital receiver according to the present invention. During the processing procedure, the content may be processed such that various functions, such as 2D/3D switching and view switching, of the PVR are carried out.

Also, in this specification, 3D content is transmitted to the digital receiver while being included in a digital broadcast signal. At this time, the 3D content may be processed by a frame-compatible system or a full resolution per eye system. Hereinafter, the latter, i.e. the full resolution per eye system, will be described as an example for easy understanding of the present invention and for the convenience of description; however, the right scope of the present invention is not limited thereto. It is obvious that the present invention may be applied to other systems related to the present invention as well as the frame-compatible system according to the same or similar principle.

The frame-compatible system is a system in which a conventional structure is reused without change in a case in which the digital receiver records 3D content through the PVR. On the other hand, it is difficult for the full resolution per eye system based on Dual video elementary stream (ES), such as Multiview Video Coding (MVC), Scalable Video Coding (SVC), and Dual Codec, to effectively store, reproduce, and time shift 3D content. Particularly in the full resolution per eye system, selective upload of a necessary stream is important in a case in which trick play of the PVR is carried out. For a dual stream, however, smooth trick play may be difficult, which may cause user inconvenience, in a case in which ES division is not possible. In other words, a more efficient method is necessary such that various functions, such as 2D/3D switching, trick play including skip, and view switching, of the PVR are carried out in the digital receiver according to the present invention. To this end, time stamp, PVR indexing, and thumbnail extraction will hereinafter be defined and described to provide a 3D service according to the present invention.

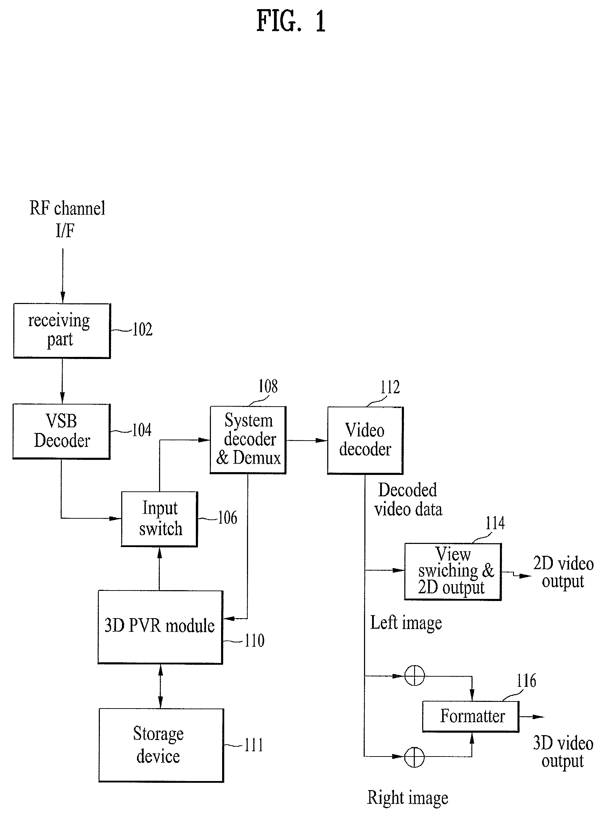

FIG. 1 is a block diagram illustrating an example of configuration of a digital receiver including a 3D PVR module according to the present invention.

Referring to FIG. 1, an example of a digital receiver according to the present invention includes a receiving part 102, a VSB decoder 104, an Input Switch part 106, a System Decoder/Demux 108, a 3D PVR module 110, a storage device 111, a video decoder 112, a view switching part/2D output part 114, and a formatter 116.

Although not shown in FIG. 1, the digital receiver may be a receiver set including a display device or a display part (hereinafter, referred to a 'display device'). Alternatively, the configuration of FIG. 1 may be realized in the form of a Set-Top Box (STB), which may be connected to a display device via an interface. Particularly in the latter case, the interface may be a High Definition Multimedia Interface (HDMI) interfacing the Set-Top Box (STB) and the display device. To this end, HDMI interface parts (not shown) may be provided at both the devices. Also, in the latter case, a 3D signaling method defined in HDMI standards may be applied to use the HDMI. Even in the latter case, therefore, 3D content processed by the Set-Top Box to perform PVR functions may be output to the display device without difficulty.

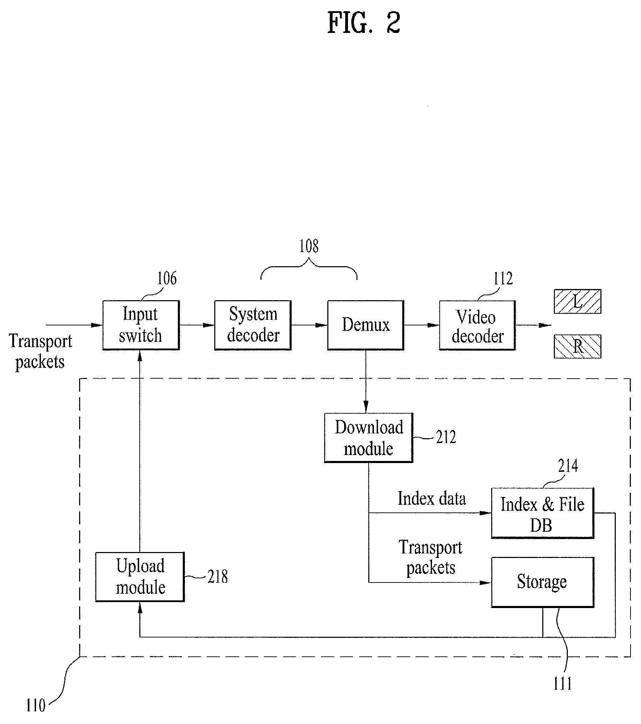

Meanwhile, only the configuration elements necessary in the digital receiver are shown in FIG. 1 for the convenience of description. According to circumstances, however, a configuration element to perform a specific function may be further included, or some of the configuration elements shown in the drawing may be omitted. Also, the respective configuration blocks shown in FIG. 1 may be modularized such that the configuration blocks are united or separated as independent configuration elements. For example, the System Decoder/Demux is shown and described as one configuration element in FIG. 1 for the sake of convenience; however, the two configuration elements will be individually described in FIG. 2, which will hereinafter be described, for more clear description.

Hereinafter, the respective configuration blocks of the digital receiver shown in FIG. 1 will be described in more detail.

The receiving part 102 tunes a Radio Frequency (RF) channel, and receives and demodulates a digital signal through the tuned channel. To this end, the receiving part 102 includes a tuner and a demodulator. The digital signal is a Moving Picture Experts Group-2 (MPEG-2) transport stream, which includes audio, video, and Packetised Elementary Streams (PESs) in which ESs including information for signaling to process the audio or/and video in the digital receiver are packetized.

Particularly in connection with a 3D service according to the present invention, a Video Stream may be a single video elementary stream (ES) or a dual video elementary stream (ES) including a base layer and an enhancement layer. In the former case, i.e. a case in which the Video Stream is a single video elementary stream (for example, a side by side format or a top and bottom format), left image data and right image data have half resolution, and therefore, a configuration element, such as a scaler (not shown), may be further necessary. On the other hand, in the latter case, i.e. a case in which the Video Stream is a dual video elementary stream, a video decoder to decode a base layer video elementary stream and another video decoder to decode an enhancement layer video stream, which will hereinafter be described, are necessary. That is, at least two video decoders are necessary. Particularly a plurality of enhancement layer video streams may be provided for proper decoding corresponding to various coding methods. Hereinafter, processing of the dual video elementary stream as previously described will be described as an example.

Also, in connection with a 3D service according to the present invention, System Information or Service Information (SI) may be used as signaling information. The SI information may include Program Specific Information (PSI), Program and System Information Protocol (PSIP), and Digital Video Broadcasting-Service Information (DVB-SI).

As an example, in Europe, table information, such as a Network Information Table (NIT), a Service Description Table (SDT), an Event Information Table (EIT), a Program Association Table (PAT), and a Program Map Table (PMT), information identifying whether a transport stream transmitted through various descriptors belonging to the respective tables or a Supplemental Enhancement Information (SEI) message or an additional SEI message in a video stream is a 3D service or content, video format information, Codec information, information identifying whether a Sub-title is present, and signaling information regarding 2D/3D linkage information are defined in DVB-SI and MPEG-2. In order to process such 3D signaling, the digital receiver may further include, for example, a signaling information processor and a related database. Alternatively, the system decoder 108, which will hereinafter be described, may also serve as the signaling information processor. In addition, definition and functions of the related tables and descriptors may be used in the digital receiver of the present invention or during the content processing procedure of the digital receiver although not clearly described in this specification.

The VSB decoder 104 performs VSB decoding with respect to the demodulated digital signal. The VSB mode is illustrated for the sake of convenience; however, the present invention is not limited thereto. It is obvious that a Quadrature Amplitude Modulation (QAM) mode or a Quadrature Phase-Shift Keying (QPSK) mode may be used.

The input switch part 106 switches a transport stream (TS) input to the system decoder 108, outputs stored content input from the storage device 111 through the upload module, which will hereinafter be described, to the system decoder 108 when the PVR is reproduced, and outputs a transport packet received via the RF input part, the receiving part 102, and the VSB decoder 104 to the system decoder 108 when live broadcast is viewed.

The system decoder 108 decodes the input transport stream or a transport packet regarding the stored content transmitted from the 3D PVR module 112. Also, the system decoder 108 controls the demultiplexer to transmit a demultiplexed video element stream to the 3D PVR module 112 when a PVR mode is requested. Also, the system decoder 108 transmits the decoded transport stream or the transport packet regarding the stored content to the video decoder 112. In addition, the system decoder 108 decodes information necessary for the digital receiver and may function as the controller to control overall system.

The demultiplexer demultiplexes various elementary streams including audio, video, and signaling information from the decoded transport stream. Particularly in a case in which the digital receiver is in a PVR mode, the demultiplexed video elementary streams are transmitted to the 3D PVR module 110. Also, in a reproduction mode, which is one of the PVR functions, video data passing through the system decoder 108 may bypass the demultiplexer and then be transmitted to the video decoder 112.

The 3D PVR module 110 receives the transport packets regarding video elementary streams input through the System Decoder/Demux 108, processes the received transport packets for a PVR mode operation, and transmits the processed transport packets to the input switch part 106 during reproduction. The construction and functions of the 3D PVR module 110 will hereinafter be described in more detail.

The video decoder 112 decodes the video data processed by the System Decoder/Demux 108. At this time, the video decoder 112 may decode the video data based on the signaling information demultiplexed by the demultiplexer. The video decoder 112 transmits decoded 2D video data to the view switching part/2D output part 114 and outputs decoded 3D video data to the formatter 116.

The view switching part/2D output part 114 outputs the video data input from the video decoder 112 to the display device such that the 2D video are output/reproduced. Also, the view switching part/2D output part 114 may perform switching of a 3D view into a 2D view according to view switching command requested by a user.

The formatter 116 receives an input left image and an input right image, formats the images according to an output frequency or format of the digital receiver or a digital device, and outputs the formatted images to the display device. In a case in which the input video elementary stream is a 2D single video elementary stream, a Frame Rate Control (FRC) block provided at the front stage of the formatter 116 may perform a proper operation for 3D processing.

FIG. 2 is a block diagram illustrating an example of configuration of the 3D PVR module of FIG. 1.

FIG. 2 shows configuration blocks of the 3D PVR module 110 of FIG. 1 in detail. Referring to FIG. 2, an example of the 3D PVR module 110 according to the present invention includes a Download module 212, an Index & File DB 214, a Storage part 111, and an Upload module 218. The overall operation of the 3D PVR module 110 will hereinafter be described with reference to FIGs. 1 and 2.

The transport stream packets passing through the VSB decoder 104 of FIG. 1 are input to the input switch part 106. The input switch part 106 determines a mode and selects a proper route based thereupon to transmit the input transport stream packets. It is assumed that the operation is performed in a first mode. In the first mode, the input transport stream packets are processed. When the input switch part 106 transmits the transport stream packets to the system decoder 108 according to the first mode, the system decoder 108 basically process the transport stream packets and transmits the transport stream packets to the demultiplexer 108. The demultiplexer 108 demultiplexes the input transport stream packets into elementary streams including audio, video, and signaling information based on a PID.

As previously described, in connection with the present invention, the demultiplexer 108 transmits transport stream packets transmitting particularly demultiplexed video elementary streams (ES) and transport stream packets transmitting signaling information including 3D PVR information according to the present invention to the download module 212.

The download module 212 transmits the transport stream packets regarding the input video elementary streams to the storage device 111 such that the transport stream packets are stored in the storage device 111 and extracts 3D PVR information from the transport stream packets transmitting the input signaling information such that the extracted information is stored in the database 214 as a database. A time stamp may be inserted into the transport stream packets stored in the storage device 111 by the download module 212. Also, the Index & File DB 214 may generate necessary index data in addition to the 3D PVR information or also store index data generated by the download module 212.

Upon receiving PVR reproduction request, the upload module 218 extracts the transport stream packets from the storage device 111. The upload module 218 uploads the transport stream packets to the input switch part 106. Upon determining that the mode is a PVR reproduction mode, the input switch part 106 outputs the transport stream packets input from the upload module 218 to the system decoder 108. The system decoder 108 directly transmits the transport stream packets input from the input switch part 106 to the demultiplexer 108 or the video decoder 112. The video decoder 112 decodes the input transport stream packets to output video data. At this time, the video decoder 112 may properly decode the input transport stream packets based on the signaling information transmitted from the system decoder 108. Also, the video decoder 112 decodes the input transport stream packets and then outputs corresponding data depending upon whether the data are 2D or 3D video data.

In addition, during the PVR reproduction, a user may request a trick mode from the digital receiver. In this case, the upload module 218 in the 3D PVR module 110 reads index data from the Index & File DB 214, extracts proper transport stream packets from the storage device 111 based on the read index data, and transmits the extracted transport stream packets to the input switch part 106. The following procedures are the same as what has been given above.

What has been given above is a brief description of overall operation.

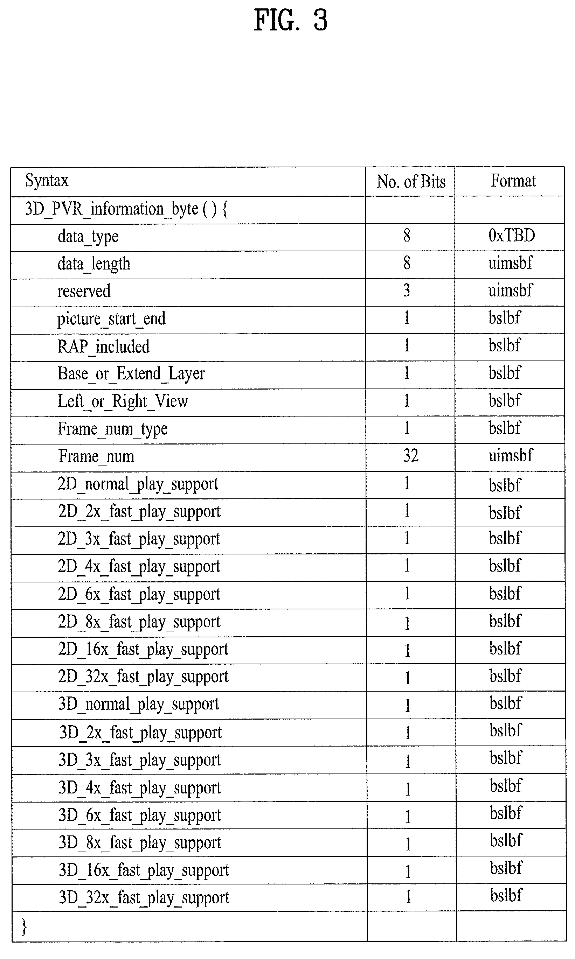

First, 3D PVR support information according to the present invention will be described as follows. FIG. 3 is a view illustrating an example of a 3D_PVR_Information_byte() bitstream syntax according to the present invention.

Hereinafter, respective fields constituting a 3D_PVR_Information_byte() according to the present invention will be described with reference to FIG. 3.

A data_type field (8 bits) indicates that this field is a 3D_PVR_Information_byte.

A Data_length field (8 bits) indicates the length of each field following this field.

A Picture_start_end field (1 bit) signals whether a transport stream packet including 3D PVR information includes a start point or an end point of each video picture. In a case in which the start point is included, the field is set to '0'. On the other hand, in a case in which the end point is included, the field is set to '1'.

A RAP_included field (1 bit) is a field indicating whether a video elementary stream contained in a transport stream packet including 3D PVR information is a Random Access Point (RAP). This means I picture (or IDR picture). If this field is '1', this means RAP.

A Base_or_Extend_Layer field (1 bit) indicates whether a corresponding picture corresponding to a base layer (or a base view) or an extended layer (or an extended view) in a coding mode, such as an MVC (or SVC). If this field is '1', this may indicate the extended layer (view). On the other hand, if this field is '0', this may indicate the base layer (view).

A Left_or_Right_View field (1 bit) indicates whether a corresponding picture is a left view or a right view. If this field is '0', this may indicate the left view. On the other hand, if this field is '1', this may indicate the right view.

A Frame_num_type field (1 bit) indicates whether a Frame_num field is based on decoding order or display order. If this field is set to 0, this may indicate that the Frame_num field is based on the decoding order. On the other hand, if this field is set to 1, this may indicate that the Frame_num field is based on the display order.

A Frame_num field (32 bits) is provided to sequentially number pictures of a program in a state in which the first picture of the program is defined as 0. At this time, numbering may be independently carried out on for Base/Extend and/or Left/Right. As a result, a picture pair having the same frame_num for left and right (or a picture pair for Base/Extend) exists.

A 2D_normal_play_support field (1 bit) indicates whether 2D normal times speed reproduction is possible using a corresponding picture. In a frame-compatible 3D video, 2D normal times speed support is not possible, and therefore, this field may have a value of 0.

A 3D_normal_play_support field (1 bit) indicates whether 3D normal times speed reproduction is possible using a corresponding picture. In a 2D video, this field may be set to 0.

A 2D_nx_fast_play_support field (1 bit) is a field to indicate whether n times speed reproduction is possible in a 2D mode using a corresponding picture. In FIG. 3, for example, 2, 3, 4, 6, 8, 16, and 32 times speeds are used as the n times speed; however, the present invention is not limited thereto. Other various times speeds, such as 64 and 128 times speeds, may be used as the n times speed.

A 3D_nx_fast_play_support field (1 bit) may determine whether n times speed reproduction is possible in a 3D mode using a corresponding picture. As previously described, for example, 2, 3, 4, 6, 8, 16, and 32 times speeds are used as the n times speed; however, the present invention is not limited thereto. Other various times speeds, such as 64 and 128 times speeds, may be used as the n times speed.

The 3D_PVR_Information of FIG. 3 as described above is transmitted by the transmission stage of the digital receiver according to the present invention to assist processing of the 3D PVR. This may be received by the digital receiver while being included in the SI information.

In connection with this case, the SI information may include PSI, PSIP, and DVB according to a system, region, and mode. Hereinafter, a method of signaling PVR support information, e.g. the 3D_PVR_Information of FIG. 3, will be described with reference to the PSI, the PSIP, and the DVB.

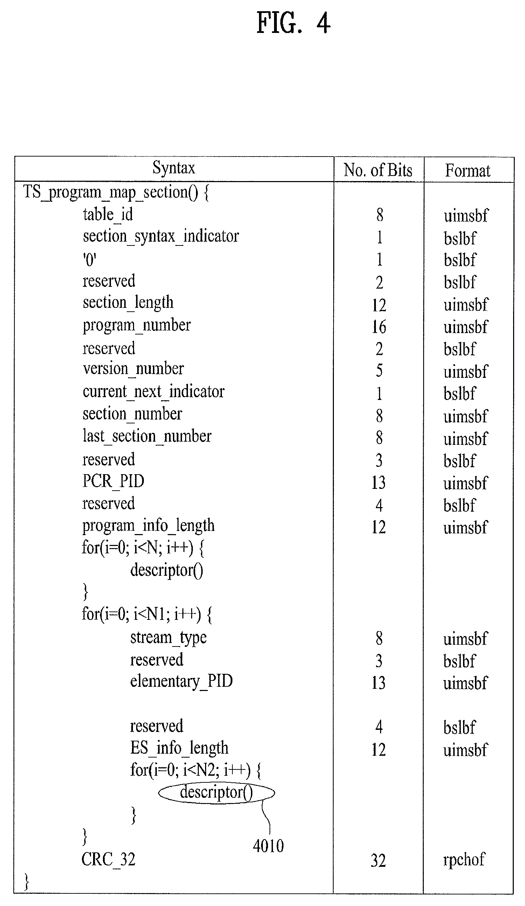

FIG. 4 is a view illustrating an example of a PMT table section bitstream syntax including PVR support information according to the present invention.

Hereinafter, fields of the PMT of FIG. 4 will be described.

A table_id field is an identifier to identify a table. An identifier to identify the PMT may be set. A section_syntax_indicator field is an indicator to identify section type of the PCT. A section_length field indicates the length of this table section. A program_number field indicates a program to which a program_map_PID is applicable. A version_number field indicates a version number of this table section.

A current_next_indicator field is an indicator to indicate whether the current table section is applicable. A section_number field indicates the section number of the current PMT section in a case in which the PMT is transmitted while being divided into one or more sections. A last_section_number field indicates the last section number constituting the PMT.

A PCR_PID field indicates a PID of a transport stream (TS) packet transmitting program clock reference (PCR) of the current program.

A program_info_length field indicates length information of a descriptor immediately following the program_info_length field in bytes.

A stream_type field indicates kind and coding information of an elementary stream included in a packet having a PID value indicated in the following elementary_PID field. Also, the stream_type field indicates coding type of a corresponding video element. In an embodiment, the coding type may include JPEG, MPEG-2, MPEG-4, H.264/AVC, and H.264/MVC.

An elementary_PID field indicates an identifier of the elementary stream, i.e. a PID value of a packet, in which a corresponding elementary stream is included. This PID may be a PID of primary video data or secondary video data.

An ES_Info_length field indicates length information of a descriptor immediately following the ES_Info_length field in bytes. That is, the ES_Info_Iength field indicates the length of descriptors included in a second loop.

Program level descriptors are included in a descriptor() region of the first loop of the PMT, and stream level descriptors are included in a descriptor() region of the second loop of the PMT. That is, the descriptors included in the first loop are descriptors individually applied to programs, and the descriptors included in the second loop are descriptors individually applied to elementary streams (ES).

A CRC_32 field indicates a Cyclic Redundancy Check value (CRC value), by which a register in the decoder has a zero output.

A descriptor() 4010 include a program_level_descriptor in connection with the present invention, and the program_level_descriptor may indicate whether PVR support information for a corresponding program is present.

For example, a predetermined descriptor may be defined or a 3D_PVR_information_flag field may be included in the previously defined descriptor according to the present invention to indicate that PVR support information for a corresponding program is present according to this field value. For example, if this field value is 1, this may indicate that PVR support information for a corresponding program is present. On the other hand, if this field value is 0, this may indicate that PVR support information for a corresponding program is not present. Also, a plurality of bits may be assigned to the field to signal whether PVR support information for a corresponding program is present and through which descriptor the information is transmitted.

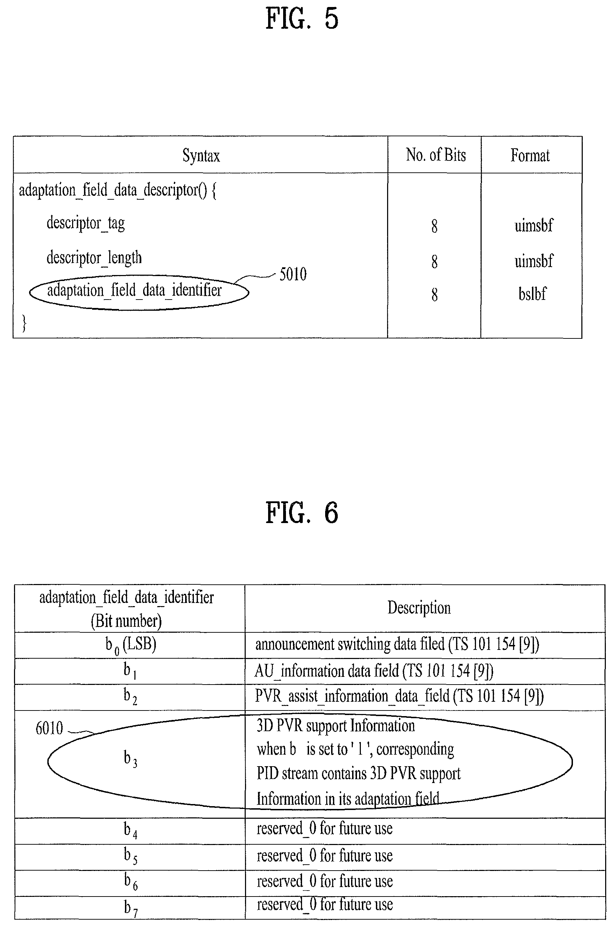

In another example, an adaptation_field_data _descriptor defined in a DVB system may be used. FIG. 5 is a view illustrating an example of an adaptation_field_data_descriptor bitstream syntax according to the present invention.

Referring to FIG. 5, a descriptor_tag field indicates that a corresponding descriptor is an adaptation_field_data_descriptor, and a descriptor_length field indicates the length of a corresponding descriptor.

An adaptation_field_data_identifier field 5010 may be defined as shown in FIG. 6.

Particularly in a case in which b3 6010 is set to 1 in FIG. 6, it may be identified whether 3D PVR support information is present in an adaptation_field of a transport stream packet including a corresponding elementary stream.

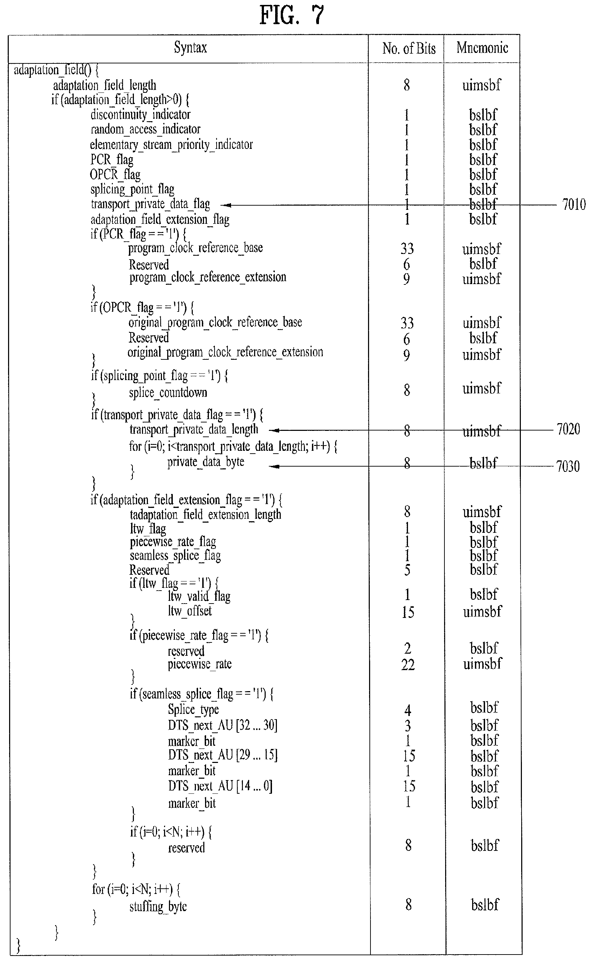

Consequently, the digital receiver may determine whether 3D PVR support information is included in a corresponding PIC stream from the SI information as previously described, and, upon determining that the 3D PVR support information is present, read and parse 3D PVR information from a adaptation_field, as shown in FIG. 7, of a transport stream packet having a PID value corresponding to an elementary stream of a corresponding program.

FIG. 7 is a view illustrating an example of an adaptation_field of an MPEG-2 transport stream packet including 3D PVR support information according to the present invention.

Hereinafter, respective fields of the adaptation_field according to the present invention will be described with reference to FIG. 7.

An adaptation_field_length field (8 bits) indicates the number of bytes to the next adaptation_field_length field. In a case in which a value of this field is '0', this indicates single stuffing byte insertion in a transport stream (TS) packet.

In a case in which a discontinuity_indicator field (1 bit) is set to 1, this indicates that a discontinuity state is true for a current TS packet. On the other hand, in a case in which the discontinuity_indicator field is set to 0, this indicates that the discontinuity state is not present or false.

A random_access_indicator field (1 bit) indicates that the current TS packet and next possible TS packets having the same PID as the packet do not include any information to assist random access at this point.

An elementary_stream_priority_indicator field (1 bit) indicates priority of elementary stream (ES) data transmitted into a payload of this TS packet among the packets having the same PID.

In a case in which a PCR_flag (1 bit) is set to 1, this indicates that the adaptation_field includes a PCR field coded in two parts.

In a case in which an OPCR_flag (1 bit) is set to 1, this indicates that the adaptation_field includes an OPCR field coded in two parts.

In a case in which a splicing_point_flag (1 bit) is set to 1, this indicates that a splice_countdown field is present in the related adaptation_field describing the generation of a splicing point

In a case in which a transport_private_data_flag (1 bit) 7010 is set to 1, this indicates that the adaptation_field includes one or more private_data bytes.

In a case in which an adaptation_field_extension_flag (1 bit) is set to 1, this indicates the presence of extension of the adaptation_field.

A program_clock_reference_base and program_clock_reference_extension field is coded in two parts. 33 bits of the first part, i.e. the program_clock_reference_base field, are a value given by PCR_base(i). 9 bits of the first part, i.e. the program_clock_reference_extension field, are a value given by PCR_ext(i). A PCR indicates time informing the arrival of a byte including the last bit of the program_clock_reference_base at the input of a system target decoder.

An original_program_clock_reference_base and original_program_clock_reference_extension field is coded in two parts. The two parts, i.e. the base field and the extension field, are coded in the same manner as in the corresponding parts of the PCR field. The presence of an OPCR is indicated by an OPCR_flag. The OPCR field is coded in a TS packet in which the PCR field is present. OPCRs are allowed to both single program and multiple program TSs. The OPCR assists reconfiguration of a single program TS from another TS. When the original single program TS is reconfigured, the OPCR may be copied to the PCR field.

A splice_countdown field (8 bits) has a positive or negative value. The positive value indicates the remaining number of the following related TS packets having the same PID until it reaches the slicing point.

A transport_private_data_length field (8 bits) 7020 indicates the number of private_data bytes of the next transport_private_data_length field. According to the present invention, therefore, the digital receiver may recognize what bytes a private_data_byte is based on this field.

According to the present invention, 3D_PVR_Information may be located in a private_data_byte field (8 bits) 7030. The digital receiver may check index information for 3D PVR realization based on the3D_PVR_Information.

An adaptation_field_extension_length field (8 bits) indicates the number of bytes of extended adaptation field data following this field.

In a case in which a legal time window_flag (ltw_flag) field (1 bit) is set to 1, this indicates the presence of an ltw_offset field.

In a case in which a piecewise_rate_flag is set to 1, this indicates the presence of a piecewise_rate field.

In a case in which a seamless_splice_flag is set to 1, this indicates that a splice_type field and a DTS_next_AU field are present. On the other hand, in a case in which a seamless_splice_flag is set to 0, this indicates that both the splice_type field and the DTS_next_AU field are not present.

In a case in which a legal time window_valid_flag (ltw_valid_flag) is set to 1, this indicates that the ltw_offset field is valid.

A value of a legal time window offset (ltw_offset) field (15 bits) is defined only in a case in which an ltw_valid flag is set to 1. In a case in which this field is defined, the legal time window offset has 300/fs seconds. Where, fs indicates a system clock frequency of the program.

A piecewise_rate field (22 bits) is defined only in a case in which the ltw_flag field and the ltw_valid_flag field are set to 1. In a case in which this field is defined, this indicates a hypothetical bit rate R.

A splice_type field (4 bits) has the same value in the following TS packets having the same PID present from the first presence of this field to the packet in which the splice_countdown reaches zero. In a case in which an elementary stream is transmitted through a video stream having an PID not corresponding to a 13818-2 video stream, this field has a value of '0000'. In a case in which an elementary stream is transmitted through a video stream having an PID corresponding to a 13818-2 video stream, this field indicates conditions related by an elementary stream for splicing purpose.

A decoding time stamp next access unit (DTS_next_AU) field (33 bits) is coded in three parts. In case of continuous and periodic decoding through this slicing point, this indicates decoding time of a first access unit of the next slicing point.

A stuffing_byte field has a fixed value of 8 bits and may be inserted by an encoder.

Scenarios of the 3D PVR support information usable when the PVR function is carried out in the digital receiver will hereinafter be described in detail.

In an embodiment of the present invention, 3D PVR support information for a 3D broadcast service may be transmitted while being included in a PSIP of the ATSC system. In this case, the 3D PVR support information may be transmitted while being included in Terrestrial Virtual Channel Table (TVCT) information or Event Information Table (EIT) information in the PSIP. However, the 3D PVR support information is not included in the above tables, and it is obvious that the the 3D PVR support information may be transmitted while being included in another table or descriptor.

The TVCT table section includes a list of attributes of virtual channels. The table section is one of the tables of the PSIP including information regarding title and start time of an event of a virtual channel. In most cases, one event indicates a typical TV program. Each EIT has multiple instances including information for one virtual channel, and each instance may be identified by coupling between the table_id and the source_id. Each EIT instance may be segmented into 256 sections. One section may include information for several events, but information regarding one event is transmitted to two or more sections without segment.

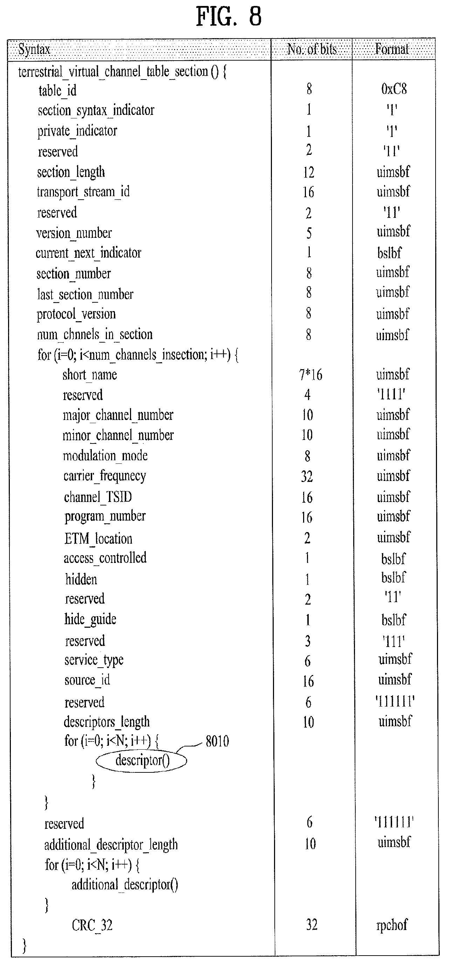

FIG. 8 is a view illustrating an example of a TVCT table section bitstream syntax including PVR support information according to the present invention.

Respective fields constituting a TVCT table section including PVR support information will be described with reference to FIG. 8.

A table_id field indicates type of table sections. For example, in a case in which corresponding table sections are table sections configuring the TVCT table, this field may have a value of 0xC8. A section_syntax_indicator field is composed of 1 bit and has a fixed value of 1. A private_indicator field is set to 1. A section_length field is composed of 12 bits, and the first two bits thereof are 00. The length of the section to a CRC field after this field is indicated by bytes.

A transport_stream_id field is composed of 16 bits and indicates an MPEG-2 Transport stream (TS) ID. This TVCT may be distinguished from another TVCT by this field. A version_number field indicates a version of the table sections. Whenever a version is changed, the version_number field is incremented by 1, and, when the version value reaches 31, the next version value becomes 0. A current_next_indicator field is composed of 1 bit. When the VCT is currently applicable, this field is set to 1. If a value of this field is set to 0, it means that this field is not yet applicable, and the next field is available.

A section_number field indicates the number of sections constituting the TVCT table. A last_section_number field indicates the last section constituting the TVCT table. A protocol_version field functions to allow a table kind different from that defined by the current protocol in future. In the current protocol, only 0 is a valid value. Values other than 0 will be used in a later version for a structurally different table.

A num_channels_in_section field indicates the number of virtual channels defined in the VCT table sections. Hereinafter, information regarding the corresponding channels will be defined in a loop form by the number of virtual channels defined in the num_channels_in_section field. Fields defined with respect to the corresponding channels in the loop form are as follows.

A short_name field indicates names of virtual channels.

A major_channel_number field indicates a major channel number of a corresponding virtual channel in a 'for' repetition sentence. Each virtual channel has multiple parts, such as a major channel number and a minor channel number. The major channel number functions as a reference number to a user for the corresponding virtual channel together with the minor channel number. A minor_channel_number field has a value of 0 to 999. The minor channel number functions as a two-part channel number together with the major channel number.

A modulation_mode field indicates a modulation mode of a transmission carrier related to a corresponding virtual channel.

A carrier_frequency field may indicate a carrier frequency.

A channel_TSID field has a value of 0x0000 to 0xFFFF. This channel is an MPEG-2 TSID related to a TS transmitting an MPEG-2 program referred to by this virtual channel.

A program_number field correlates a virtual channel defined in the TVCT with a Program Association Table (PAT) and a Program Map Table (PMT) of MPEG-2.

An ETM_location field indicates the presence and location of an Extended Text Message (ETM).

An access_controlled field is a flag field. In a case in which this field is 1, it may indicate that an event related to a corresponding virtual channel is access controlled. In a case in which this field is 0, it may indicate that access is not limited.

A hidden field is a flag field. In a case in which this field is 1, access is not allowed although a user directly inputs a corresponding number. A hidden virtual channel is skipped when the user performs channel surfing, and it appears as if the hidden virtual channel is not defined.

A hide_guide field is a flag field. In a case in which this field is set to 1 for a hidden channel, a virtual channel and an event thereof may be display on an EPG display. In a case in which a hidden bit is not set, this field is ignored. Consequently, a non-hidden channel and an event thereof are displayed on the EPG display irrespective of status of the hide_guide field.

A service_type field identifies type of a service transmitted through a corresponding virtual channel.

A source_id field identifies a programming source related to a virtual channel.

A descriptors_length field indicates the length of following descriptors for a corresponding virtual channel in bytes.

No descriptor may be included in a descriptor() field 8010, or one or more descriptors may be included in descriptor()field 8010. This descriptor() field 8010 will hereinafter be described.

A additional_descriptors_length field indicates the total length of a following VCT descriptor list in bytes.

A CRC_32 field indicates a Cyclic Redundancy Check (CRC) value, by which a register in the decoder has a zero output.

A service_type field is a field to indicate that a broadcast service provided in a corresponding channel is a 3D broadcast service. In an embodiment, in a case in which a field value of the service_type field is 0x11, this may indicate that a 3D broadcast program (including an additional video stream to display audio, video, and 3D stereoscopic image) is provided in a corresponding channel. In a case in which the service_type field indicates that the broadcast service is a 3D broadcast service, it is necessary for the broadcast receiver to parse information regarding two video streams (primary video stream and secondary video stream) and a 3DTV service location descriptor.

A descriptor() field 8010 may include a channel_location_descriptor including a descriptor related to a 3D stereoscopic service according to the present invention and 3D PVR support information. In addition, the descriptor() field 8010 may include information regarding two video streams constituting a stereoscopic video service.

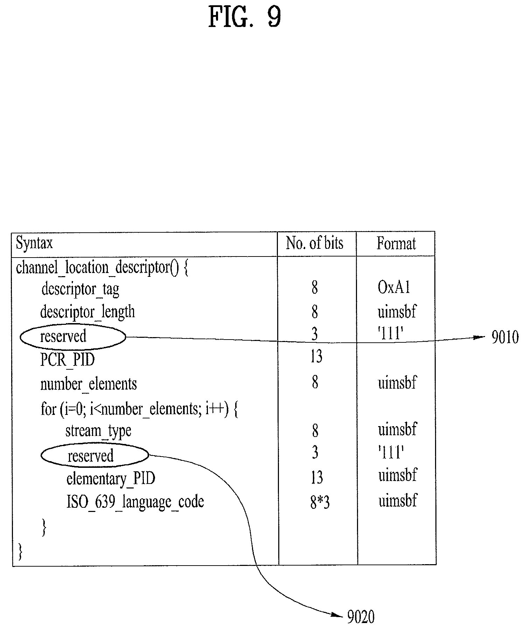

FIG. 9 is a view illustrating an example of a channel_level_descriptor bitstream syntax according to the present invention.

A channel_level_descriptor of FIG. 9 is a field to signal whether 3D PVR support information for a corresponding channel is present according to the present invention. A service_location_descriptor previously defined in the PSIP may be used, or a descriptor fully different from the service_location_descriptor may be defined and included in the TVCT table section. In this specification, the former case, i.e. a case in which a reserved of the service_location_descriptor is used, will be described as an embodiment; however, the present invention is not limited thereto.

Referring to FIG. 9, a descriptor_tag field indicates that a corresponding descriptor is a channel_level_descriptor, and a descriptor_length field indicates the length of the corresponding descriptor.

A reserved field (3 bits) 9010 is used as a 3D_PVR_information_flag to indicate whether 3D PVR support information is present using only 1 bit in a state in which two bits are reserved. For example, in a case in which a value of the 3D_PVR_information_flag is 1, this indicates that the 3D PVR support information is present. On the other hand, in a case in which a value of the 3D_PVR_information_flag is 0, this indicates that the 3D PVR support information is not present.

A PCR_PID field (13 bits) indicates PIDs of transport stream packets including valid PCR fields for a program indicated by a program_number field.

A number_elements field (8 bits) indicates the number of PIDs used for a corresponding program. In each PID indicated by this field, related information is defined in a for loop structure.

A stream_type field (8 bits) indicates type of a corresponding elementary stream.

A reserved field (3 bits) 9020 may be defined in the same manner as in the reserved field 9010.

A elementary_PID field indicates an PID for a corresponding elementary stream.

A ISO_639_language_code field (3 bytes = 24 bits) indicates a language used for corresponding elementary stream.

A case in which the first reserved field 9010 is used is slightly different in meaning from a case in which the second reserved field 9020 is used. For example, either the reserved field 9010 or the reserved field 9020 in this for loop structure may be present, or both the reserved field 9010 and the reserved field 9020 may be present.

This is because in the former case, the digital receiver may read and parse 3D PVR support information from an adaptation_field of a transport stream packet for all elementary streams constituting a corresponding channel from a corresponding flag value, whereas, in the latter case, the digital receiver may read and parse 3D PVR support information from an adaptation_field of a transport stream packet corresponding to a corresponding stream. For example, in a case in which a 3D_PVR_Information_flag is 1 only for a video elementary stream, it is sufficient to find 3D PVR support information from a stream including the video elementary stream, and it is not necessary to find the 3D PVR support information from audio or other streams constituting the same channel.

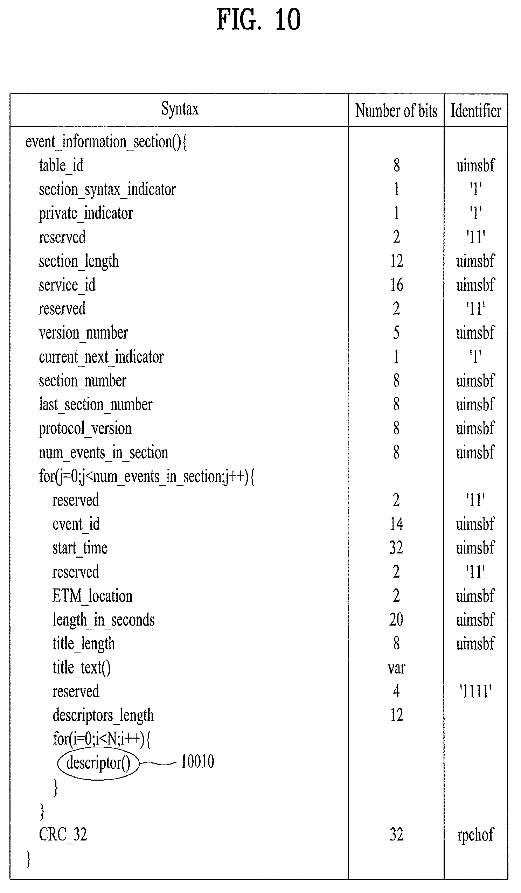

FIG. 10 is a view illustrating an example of an EIT table section bitstream syntax including PVR support information according to the present invention.

Hereinafter, respective fields constituting the EIT according to the present invention will be described with reference to FIG. 10.

A table_id field is composed of 8 bits and has a value of '0xCB'. This indicates that a relevant section belongs to the EIT. A section_syntax_indicator is composed of 1 bit and has a value of '1'. This indicates that a relevant section is based on a generic section syntax beyond a section_length field. A private_indicator field is composed of 1 bit and may have a value of '1'. A section_length field (12 bits) indicates the number of remaining bytes in the following section.

A source_id field (16 bits) indicates a source_id of a virtual channel transmitting events described in a corresponding section. A version_number field (5 bits) indicates a version number of a corresponding table section. A current_next_indicator field (1 bit) is set to 1. This indicates that corresponding table section is currently applicable. A section_number field (8 bits) indicates the number of a corresponding section among a plurality of sections in the EIT. A last_section_number field (8 bits) indicates the number of the last section among a plurality of sections in the EIT. A protocol_version field has an integer of 8 bits, the sign of which is not set. This indicates the current protocol version.

A num_events_in_section field indicates the number of events in a corresponding table section. In a case in which a value of this field is 0, this indicates that no events are defined in the corresponding section. Hereinafter, information regarding each event in the 'for' loop structure according to the value of the num_events_in_section field will be described.

An event_id field indicates identification number of a described event.

A start_time field has an integer of 32 bits, the sign of which is not set. This indicates start time of a corresponding event in GPS time from 00:00:00 January 6, 1980 UTC.

An ETM_location field (2 bits) indicates the presence or absence and location of an extended text message (ETM).

A length_in_seconds field indicates duration of a corresponding event in seconds.

A title_length field indicates the length of a title_text () field, which will hereinafter be described.

A title_text() field indicates an event title having a format of a multiple string structure.

A descriptors_length field indicates the total length of the following event descriptor in the EIT in bytes.

A descriptor() field 10010 includes no or a plurality of descriptors included in the EIT in a 'for' loop structure.

A CRC_32 field (32 bits) indicates a CRC value, by which registers in the decoder have a zero output.

In connection with the present invention, a descriptor() field 10010 may indicate the presence or absence of 3D PVR support information regarding a corresponding event through any one of various descriptors of an event level.

At this time, the above method may be substantially the same as the previously described methods. For example, the digital receiver may previously know that 3D PVR support information will be included from an adaptation_field of a transport stream packet for a corresponding event using a descriptor included in the EIT. Also, the digital receiver may determine that corresponding information is included in all transport stream packets corresponding to an event and thus check an adaptation_field of a transport stream packet regarding all elementary streams for an event, not a specific elementary stream.

The above description is related to, for example, the ATSC method or system. Hereinafter, a DVB method or system will be described. However, a detailed description of features identical to what has been given above will be omitted.

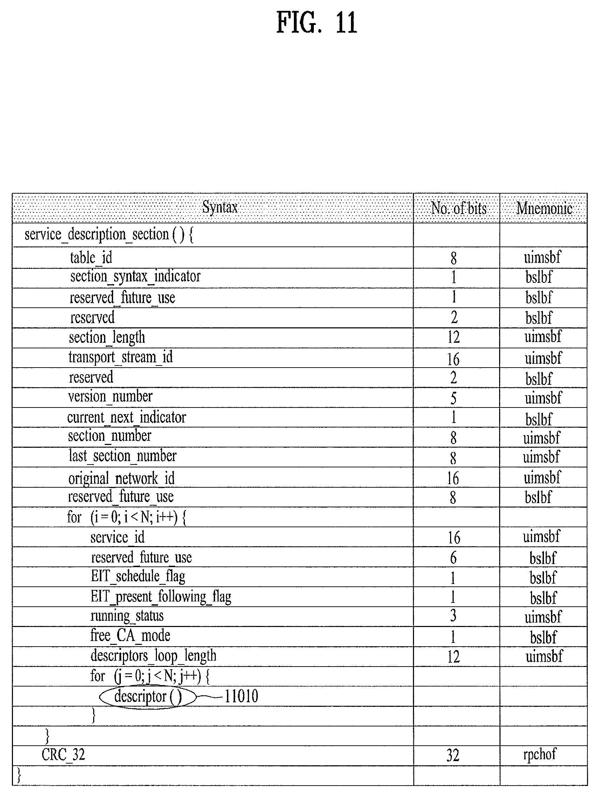

FIG. 11 is a view illustrating an example of a Service Description Table (SDT) table section bitstream syntax including PVR support information according to the present invention.

The SDT describes services included in a specific transport stream in the DVB method. Hereinafter, respective fields constituting the SDT table sections will be described in more detail with reference to FIG. 11.

A table_id field is an identifier to identify a table. For example, a specific value of the table_id field indicates that this section belongs to a service description table. A section_syntax_indicator field is a 1 bit field and is set to 1. First two bits of a section_length field are set to 00. Byte number of a section including a CRC is indicated after this field. A transport_stream_id field serves as a label to distinguish Transport stream (TS).

A version_number field indicates a version number of sub_table. Whenever a version number of sub_table is changed, the number of version_number field is increased by 1. A value of a current_next_indicator field is set to 1 when the sub_table is currently applicable. If a value of this field is set to 0, this means that this field is not yet applicable, and the next field is available. A section_number field indicates section number. The first section has a value of 0x00, and the value is incremented by 1 for each section having the same table_id, the same transport_stream_id, and the same original_network_id. A last_section_number field indicates the number of the last section (that is, the highest section number) of a corresponding sub_table, which is a portion of this section. An original_network_id field is a label to identify a network_id of the transmission system.

This SDT table sections describe a plurality of services. Fields of each service may be defined in a for loop structure.

A service_id field defines an identifier serving as a label to distinguish between services included in the TS. This field may have the same value as, for example, program_number of program_map_section.

In a case in which an EIT_schedule_flag field is set to 1, it indicates that EIT schedule information for a corresponding service is included in the current TS. On the other hand, in a case in which a field of this field is 0, this indicates that EIT schedule information is not included in the current TS.

In a case in which an EIT_present_following_flag field is set to 1, it indicates that EIT_present_following information for a corresponding service is included in the current TS. On the other hand, in a case in which a field of this field is 0, this indicates that EIT present/following is not included in the current TS.

A running_status field indicates status of a service.

In a case in which a free_CA_mode field is set to 0, it indicates that all elementary streams of a corresponding service are not scrambled. On the other hand, in a case in which the free_CA_mode field is set to 1, this indicates one or more streams are controlled by a Conditional Access (CA) system.

A descriptors_loop_length field indicates the total length of the following descriptors in bytes.

A CRC_32 field indicates a CRC value, by which a register in the decoder has a zero output.

According to an embodiment of the present invention, a descriptor() 11010 following the descriptors_loop_length field may include a service_level_descriptor of DVB-SI. The service level descriptor may indicate the presence or absence of 3D PVR support information regarding a corresponding service. For example, the service_level_descriptor may use a signaling method using b3 of an adaptation_field_data descriptor as previously described in FIG. 6. The digital receiver may read and parse 3D PVR support information from an adaptation_field of a transport stream pack for a corresponding service. The digital receiver may check an adaptation_field of a transport stream pack corresponding to all elementary streams included in a service to find 3D PVR support information

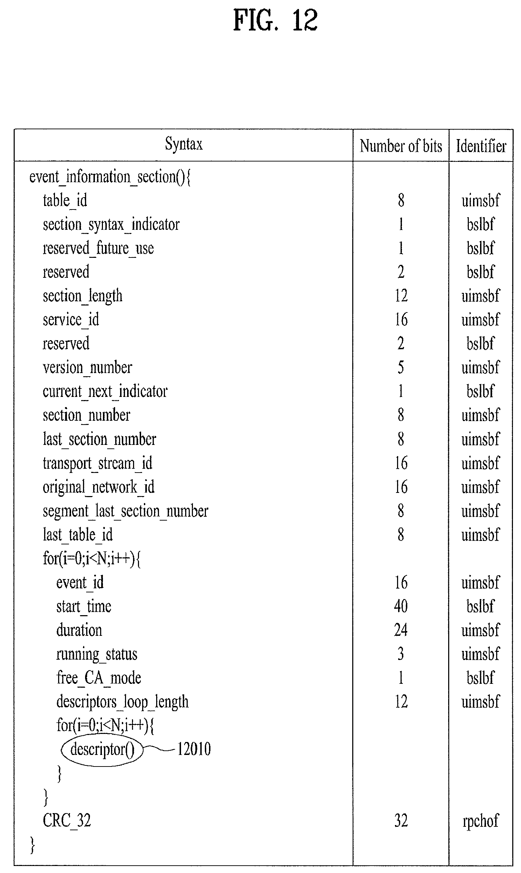

FIG. 12 is a view illustrating another example of an EIT table section bitstream syntax including PVR support information according to the present invention.

FIG. 12 shows signaling for an event included in a channel or a service, which is basically common to the ATSC system and the DVB system. Fields defined in a corresponding table section are generally similar. Consequently, a description of most fields corresponding to the fields of the PSIP EIT of FIG. 10 will be omitted, and only a descriptor() field 12010 will be described in connection with the present invention.

In connection with the present invention, the descriptor() field 12010 may indicate the presence or absence of 3D PVR support information regarding a corresponding event through any one of various descriptors of an event level.

At this time, the above method may be substantially the same as the previously described methods. For example, the digital receiver may previously know that 3D PVR support information will be included from an adaptation_field of a transport stream packet for a corresponding event using a descriptor included in the EIT. Also, the digital receiver may determine that corresponding information is included in all transport stream packets corresponding to an event and thus check an adaptation_field of a transport stream packet regarding all elementary streams for an event, not a specific elementary stream.

Hereinafter, operations and functions of configuration elements in the 3D PVR module 110 will be described in more detail.

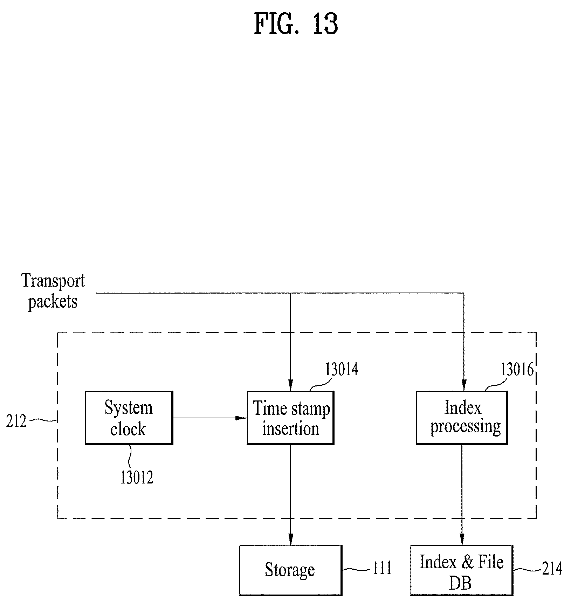

FIG. 13 is a block diagram illustrating an example of configuration of the download module 212 included in the 3D PVR module 110 of FIG. 2.

In particular, FIG. 13 shows the operation and function of the download module 212. The download module 212 receives the transport packet of the video elementary streams demultiplexed by the demultiplexer 108 and time stamps and/or index the received transport packet.

The download module 212 is basically a configuration element to store a Packet Identifier (PID) stream corresponding to a program to be recorded among transport streams input to the system decoder 108.

Referring to FIG. 13, the download module 212 may include a system clock part 13012, a time-stamp insertion part 13014, and an index processing part 13016. The index processing part 13016 is provided to perform an indexing operation for the convenience of trick play during a PVR reproduction mode, which will hereinafter be described. The index processing part 13016 may not be necessary in a base reproduction mode. According to circumstances, therefore, the index processing part 13016 may be omitted.

The time stamp processing is provided to enable timing when a transport packet to be uploaded through the upload module 218 is input to the system decoder 108 to coincide with timing of a transport stream input to the system decoder 108 at the time of storage during a reproduction process of transport packets for video elementary streams recorded and stored through the download module 212.

Basically, the time stamp processing method may include three methods. The first method is a method of inserting a time stamp every each transport packet input from the demultiplexer 108, the second method is a method of inserting a time stamp every predetermined number of transport packets, and the third method is an adaptive time-stamp insertion method. In addition, a method of non-periodically inserting a time stamp without insertion of a time stamp every each transport packet unlike the first method and periodic insertion of a time stamp unlike the second method may also be used.

In the first method, a time stamp (4 bytes) is added to each transport packet (188 bytes) input to the download module 212 through the system decoder 108, resulting in a time-stamped transport stream having a size of 190 bytes.

Also, the second or third method is used to minimize overhead due to a time stamp. Whether a time stamp is to be inserted into an input transport packet is decided to adaptively add a time stamp, thereby improving system efficiency.

For example, during time stamp processing, input data becomes a transport packet to be stored, and a time stamp corresponding to a PCR value when a corresponding transport packet is input is added to the transport packet. As a result, a time stamp of 4 bytes is inserted into the transport packet at the time of outputting, resulting in a time-stamped transport stream of 190 bytes.

Hereinafter a method of adaptively inserting a time stamp according to the present invention will be described in more detail.

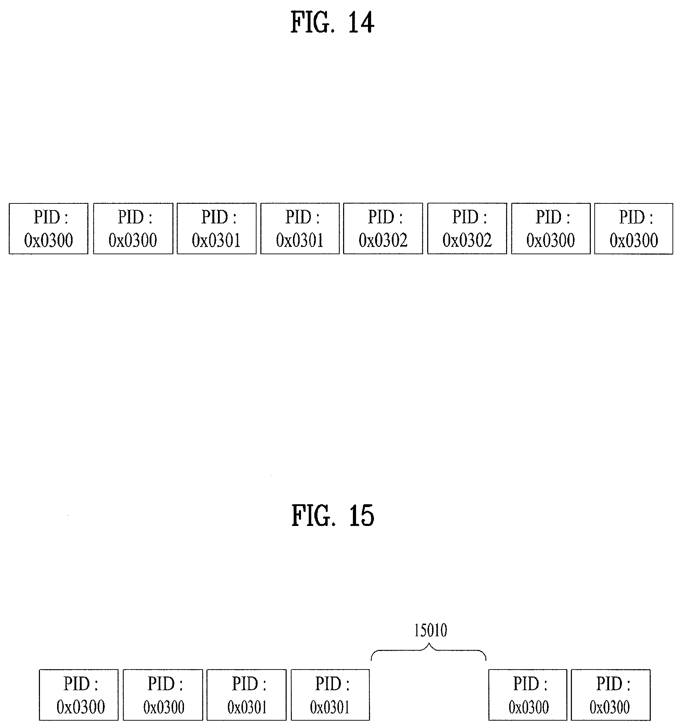

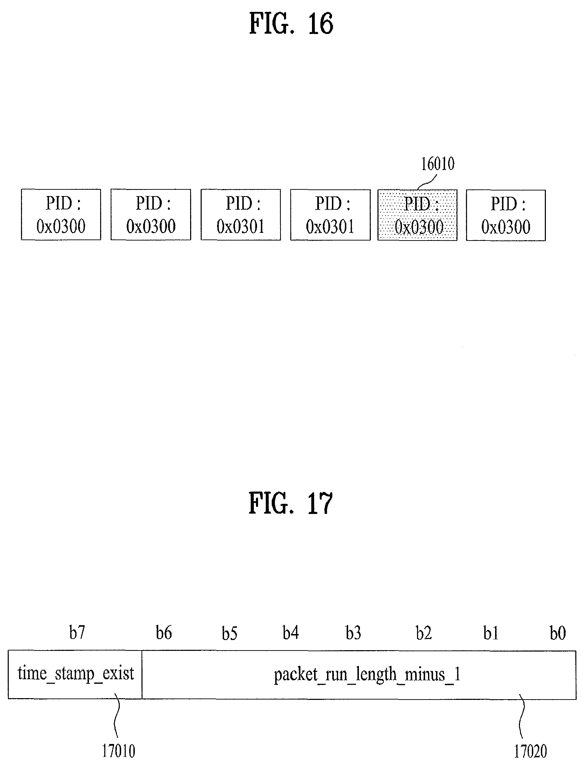

FIGs. 14 to 16 are views illustrating an example of time stamp insertion realization in the download module according to the present invention, and FIG. 17 is a view illustrating an example of a time stamp index data structure at the time of using a time stamp according to the present invention.

FIGs. 14 to 16 illustrates a case in which a time stamp is not inserted into all transport packets belonging to all transport streams to be stored but is inserted only when discontinuity occurs. The above method, i.e. the method in which a time stamp is not inserted into all transport packets, is referred to as an adaptive time stamp insertion method.

In a case in which the adaptive time stamp is used as described above, for example, information regarding the presence or absence of a time stamp may be stored in each transport packet. To this end, for example, a time stamp index (FIG. 17) to inform each transport packet of the presence or absence of a time stamp may be used in this specification.

Referring to FIG. 17, the data structure of a time stamp index used when an adaptive time stamp is used includes a time_stamp_exist field 17010 indicating or identifying the presence or absence of a time stamp in a corresponding transport packet as a most significant bit (MSB) of 1 bit and a packet_run_length_minus_1 field 17020 as the other bits. The packet_run_length_minus_1 field 17020 may indicate or identify the number of continuous transport packets, to which a time stamp is not added, from a corresponding packet, i.e. this packet. Through the use of the packet_run_length_minus_1 field 17020, therefore, the time stamp index defined as shown in FIG. 17 is not necessary to be added to all input transport packets but to a predetermined number of the transport packets. In this case, transport packets, to which a time stamp index is added, may be configured periodically or non-periodically by properly adjusting a value of the packet_run_length_minus_1 field 17020 constituting each time stamp index, thereby improving efficiency.

In a case in which the packet_run_length_minus_1 field 17020 constituting a time stamp index is not defined, for example, the time stamp index may be added to all input transport packets or to all transport packets, to which a time stamp index is not added.

A time stamp processing method according to the present invention will hereinafter be described with reference to FIGs. 14 to 17. In particular, a time stamp index realization method as shown in FIG. 17 will be described with reference to FIGs. 14 to 16.

Referring to FIG. 14, there are illustrated a total of 8 PID streams input to the system decoder 108. As illustrated, the first two PID streams have a PID value of 0x0300, the following four PIC streams have PID values of 0x0301, 0x0301, 0x0302, and 0x0302, and the last two PID streams have a PID value of 0x0300.

In a case in which PID streams belonging to streams to be downloaded, among the eight PID streams of FIG. 14, have PID values of 0x0300 and 0x0301, a total of 6 PID streams excluding the two PID streams having a PID value of 0x0302, among a total of 8 PID streams, is input to the download module 212 through PID filtering as shown in FIG. 15.

The respective PID streams are, for example, sequentially input. This is because each PID stream has a system clock input to the system decoder 108, and the PID streams stored in the storage device 111 in the PVR module are reused during future reproduction.

In other words, as shown in FIG. 15, a total of 6 PID streams excluding two PID streams (fifth and sixth PID streams) having a PID value of 0x0302 through PID filtering, among a total of 8 PID streams initially input to the system decoder 108, are input to the download module 212. As a result, discontinuity 15010 occurs.

In a case in which a discontinuous section 15010 occurs among the PID streams as shown in FIG. 15, therefore, it is necessary for the download module 212 to perform proper processing with respect to PID streams input after the discontinuous section 15010.

To this end, for example, an adaptive time stamp method according to the present invention is used. In this method, a time stamp including an adaptive time stamp defined as shown in FIG. 17 is added to a PID stream 16010 first input after the discontinuous section 15010.

Also, in this case, a time_stamp_exist field 17010 of the adaptive time stamp is defined as a value indicating the presence of a time stamp in a corresponding packet, and the following packet_run _length_minus_1 field 17020 indicates the number of PID streams present before the next discontinuous section, thereby improving system efficiency.

In FIG. 17, for example, the PID streams are defined in 1 byte, as a result, a range indicating the PID streams may be limited. In this case, the number of bytes defined as a corresponding adaptive time stamp may be increased, or PID streams within a proper range may be reselected and a time stamp may be added to the reselected PID streams to solve the above problem. For example, in a case in which Run length is 128 or more, a code may be split. In a case in which 255 packets having no time stamp are continuously generated, therefore, this may be expressed by 0x7F 0x7D.

Referring to FIG. 16, a PID stream, to which a time stamp is added, may have a size of 192 bytes unlike other PID streams having a size of 188 bytes.

As previously described, a time stamp is added to the PID streams input to the download module 212 of FIG. 15. As a result, in FIG. 16, four packets having no time stamp are continuously generated, a packet having a time stamp is generated, and packets having no time stamp are generated. Consequently, coding to '0x03 0x80 0x00' is achieved.

In the above, the method of processing the time stamp in the download module 212 was described with reference to FIGs. 14 to 17.

Hereinafter, a method of configuring an index (different from the adaptive time stamp index as previously described) in the download module 212 will be described.

The download module performs an operation to store a PID stream corresponding to a program to be recorded among broadcast streams input to the system decoder 108. The download module may read and parse 3D PVR support information to store a corresponding stream and store information necessary in control and/or management for future reproduction and trick play.

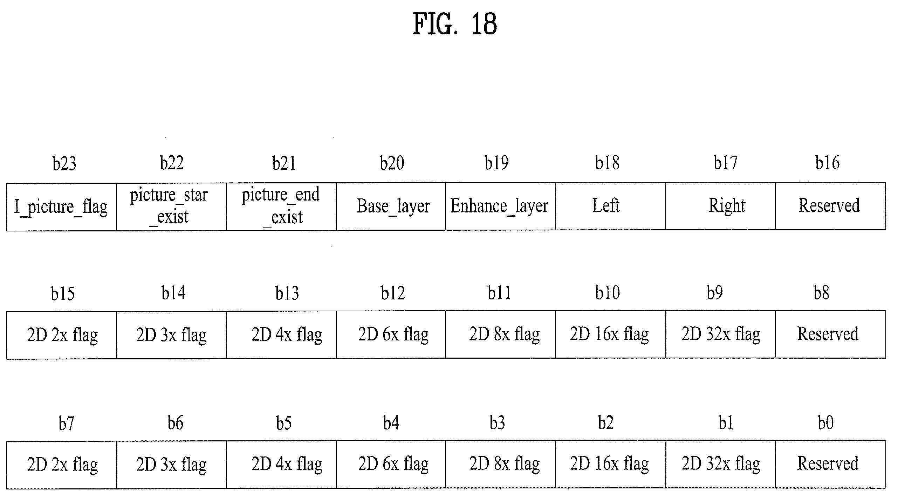

FIG. 18 is a view illustrating an example of index configuration in the download module 212 according to the present invention.

Referring to FIG. 18, an index defined as 1 byte includes a total of 24 bits from a most significant bit (MSB) b23 I_picture_flag to a least significant bit (LSB) b0 Reserved.

This index is provided for content necessary to realize trick play, such as fast forward and skip, generally requested in the PVR.

In connection with this case, the video decoder of the digital receiver performs decoding at normal times speed during a real trick play realization process although a user requests trick play during a PVR reproduction process. However, pictures actually decoded according to the request trick play are input while being skipped at corresponding times speed, and therefore, the user may fell a rapid times speed or skip effect.

As a result, it is necessary for the upload module 218 to quickly find, extract, and input position of data to be input to the (system) decoder such that the trick play is smoothly carried out. To this end, it is necessary to quickly find position of corresponding data. In this case, index information according to the present invention is provided for the upload module 218 to more rapidly and efficiently retrieve data to be input to the decoder.

In other words, the index information is provided to extract additional data capable of rapidly retrieve position of proper data from the stored video stream in a case in which the digital receiver performs trick play during a PVR reproduction process according to request. Information is generated to extract data corresponding to a random access point (RAP) when skip or fast forward is carried out and to selectively input the extracted data to the decoder. In the above, the random access point (RAP) may be any one selected from among I, B, and P pictures. In this specification, however, the I picture will be described as an example of the random access point (RAP) for easy understanding of the present invention and for the convenience of description. This is because system efficiency is further improved in a case in which the I picture, which can be independently reproduced unlike the B and P pictures, which cannot be independently reproduced and are reference pictures for other pictures, is set as the random access point (RAP). That is, the I picture is a randomly accessible picture.

In addition, the index information may define 2D/3D related indexing function to select a 2D or 3D mode during trick play, i.e. to properly upload stored streams according to this mode.

To this end, it is necessary for the download module 212 to read 3D PVR support information included in an adaptation_field of a transport stream packet stored at the time of index generation and check whether a RAP is included in a corresponding packet from the read information. Also, the download module 212 determines whether a video elementary steam included in a corresponding transport packet is left image data or right image data (left/right). In addition, the download module 212 may determine whether a 3D stream is a stream compatible with a 2D stream.

The download module 212 may also check times speed information of a corresponding packet to configure chain information for corresponding times speed when fast play is realized. Input data may be a transport stream to be stored, and output data may include information regarding whether an I picture start (or a start byte of an RAP) is included in each transport stream packet, an elementary stream and view type (whether 2D compatibility is possible and a left image view or a right image view are included) in a case in which the I picture start is included, and times speed chain information.

The download module 212 generates indexes while parsing 3D PVR support information and collects the indexes to prepare and store an index file.

For example, the download module 212 checks the presence or absence of index information as illustrated in FIG. 15 for each transport packet or each group of transport packets (for example, each group of 100 transport packets or variable number of packets to generate an index every I picture start) to generate indexes. The download module 212 transmits the checking result to the index and file database, and the index and file database maps and manages physical position at which a corresponding index and transport packet us stored. For a random access point in a 3D mode, for example, a video elementary stream of an enhanced layer is not necessarily an I picture.

For example, the download module 212 receives a transport packet to be stored as input data and outputs a transport packet including an index including information regarding whether an I picture start or random access point (RAP) start byte is included in each transport packet, an elementary stream including an I picture start position, and view type as output data. The view type information includes, for example, information regarding whether 2D compatibility is possible and whether a right view is included.

Referring to FIG. 18, an index may be generated for each packet as an example of an index configured by the download module 212. In this case, the index includes I_picutre_flag b23 regarding the presence or absence of an I picture, picture_start_exist b22 regarding the presence or absence of a picture start point, picture_endt_exist b21 regarding the presence or absence of a picture end point, base_layer b20 regarding whether a layer is a base layer, Enhance_layer b19 regarding whether a layer is an enhancement layer, left b18 regarding whether data are left image data, right b17 regarding whether data are right image data, and reserved b16 for future use, which are sequentially arranged from a most significant bit. In addition, times speed information or chain information is included while being defined from b15 to b9 and b7 to b1. The former, i.e. b15 to b9, may indicate an information flag regarding 3D times speed, and the latter, i.e. b7 to b1, may indicate an information flag regarding 2D times speed.

The digital receiver may know codec information of particularly an enhancement layer based on signaling information in a received digital signal. In connection with this case, an enhance_layer flag of the index configuration of FIG. 18 is stored. As a result, the system decoder 108 may know that a corresponding video stream is a dual stream. However, the enhance_layer flag alone may be meaningless. This is because a video elementary stream of an enhancement layer is based on a video elementary stream of a base layer. When the enhance_layer flag is inactivated, therefore, the digital receiver may know that a corresponding video stream is a single stream. In this case, a base_layer flag may be activated. This is because a base layer itself corresponds to a single video stream, and therefore, related information may be defined.

Also, a Left or Right flag may be used to decide whether viewing is to be carried out based on left image data or right image data during the 2D mode view, such as view switching, in addition to identification of left image data or right image data of corresponding data during a 3D mode view. Also, corresponding flag information may be used when view switching is requested during viewing as previously described.

In the above, the download module 212 was described in detail. Hereinafter, the upload module 218 to upload transport packets for a video elementary stream to the system decoder 108 during PVR reproduction will be described in detail.

First, generation of information necessary to configure a fast play chain during trick play, which is one of the PVR functions, will be described in more detail.

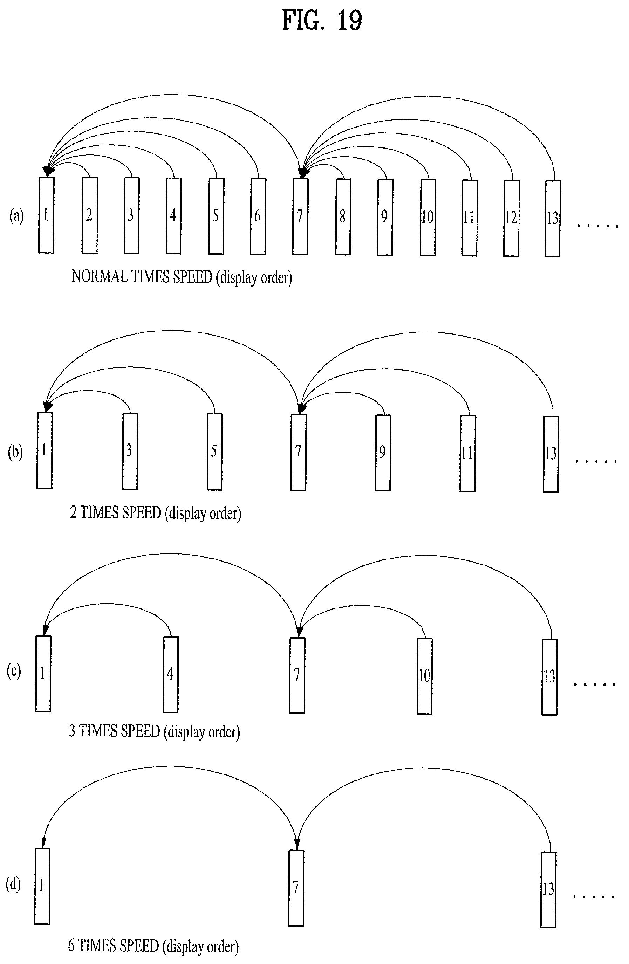

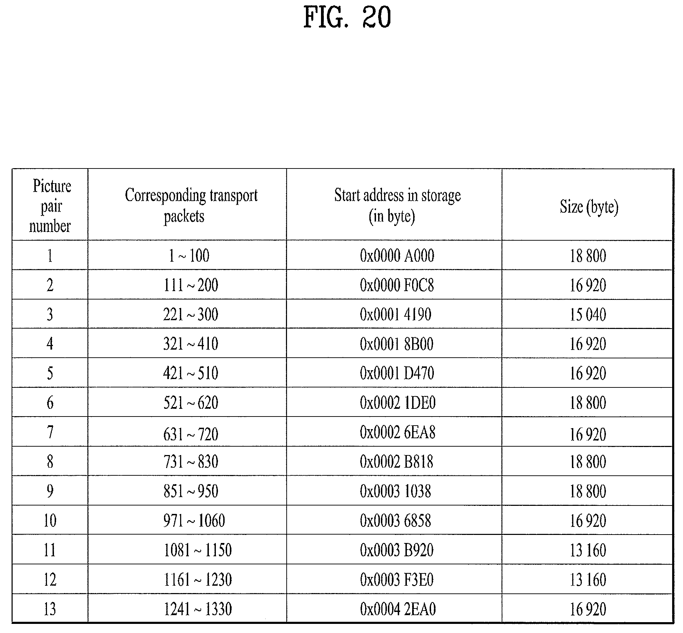

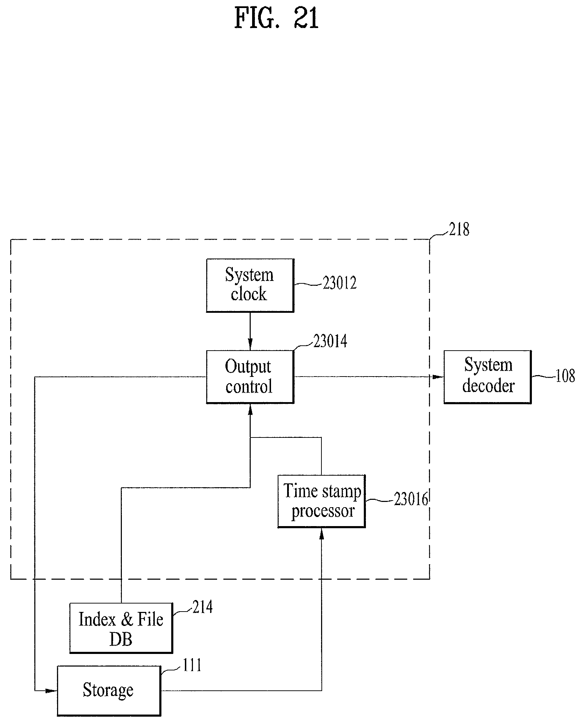

FIG. 19 is a conceptual view illustrating a concept of a prediction chain for fast play support according to the present invention, FIG. 20 is a view showing an example of a packet for picture data stored according to the present invention and configuration of storage device address mapping information, and FIG. 21 is a view illustrating an example of configuration of a fast play command chain table for fast play mode support according to the present invention. Particularly in FIG. 19, it is assumed that each picture number is, for example, a picture pair. Also, FIGs. 20 and 21 show a frame number and transport stream packet when a fast play chain is configured based on FIG. 19.

Basically, pictures belonging to each play chain may be changed according to a times speed mode selected by a user when trick play, which is one of the PVR functions, is provided in the digital receiver. Consequently, more rapid and efficient processing is possible when trick play is provided in the digital receiver in future by previously mapping data corresponding to each times speed and generating and storing the mapping information.

FIGs. 19(a) to 19(d) are conceptual views of a prediction chain in a case in which the display order is normal times speed, 2 times speed, 3 time speed, and 6 times speed.

FIGs. 20 and 21 will hereinafter be described with reference to FIGs. 19(a) to 19(d).

FIG. 20 shows picture pair numbers, transport stream packets corresponding to the picture pair numbers, address information (in bytes) regarding start positions in the storage device, and sizes in bytes. For example, in a case in which a picture pair number is 1, transport stream packets corresponding to the picture pair number are 1 to 100, address information (in bytes) regarding start positions in the storage device is 0x0000 A000, and the size in bytes is 18800 bytes. Also, in a case in which a picture pair number is 4, transport stream packets corresponding to the picture pair number are 321 to 410, address information (in bytes) regarding start positions in the storage device is 0x0001 8B00, and the size in bytes is 16920 bytes. In FIG. 20, information regarding picture pair numbers 1 to 13 is defined in the above manner.

A play command chain of corresponding times speed may be configured based on information of FIGs. 19 and 20. FIG. 21 shows configuration of particularly 3 times speed fast play command chain table.

Referring to FIG. 21, Go to 0x0000 A000', 'Read up to 0x000 E96F', 'Skip to 0x000 8B00' to 'Skip to 0x0004 2EA0', and 'Read up to 0x0004 70B7' are defined at the left side of the 3 times speed fast play command chain table and respectively mean 'start of picture pair 1', 'read until the end of picture pair 1', 'start of picture pair 4' to 'start of picture pair 13', 'read until the end of picture pair 13'.

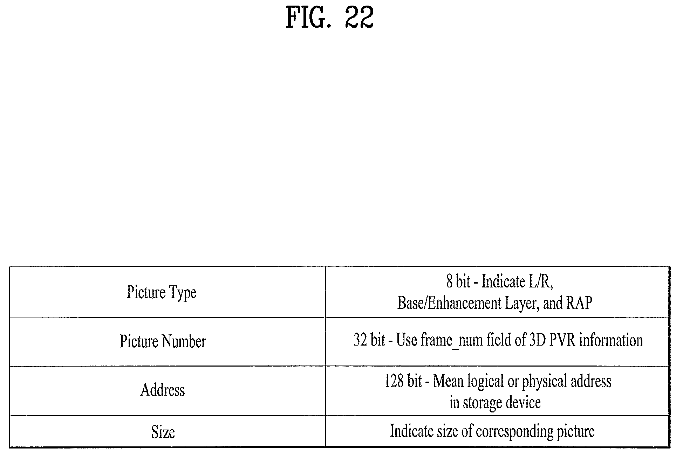

FIG. 22 is a view illustrating an example of an index file structure to perform a 3D PVR function using the information of FIGs. 19 to 21 according to the present invention. The index file structure of FIG. 22 is configured for the use in the digital receiver and may be a format to collect indexes extracted from respective packets and finally store the collected indexes.

Referring to FIG. 22, the index file structure to perform the 3D PVR function according to the present invention may include Picture Type, Picture Number, address, and size.

The Picture Type (8 bits) indicates L/R, a base/enhancement layer, and a RAP.

The Picture Number (32 bits) may be configured using a frame_num field of 3D PVR support information.

The address (128 bits) indicates logical or physical address information in the storage device 111.

The size indicates the size of a corresponding picture.

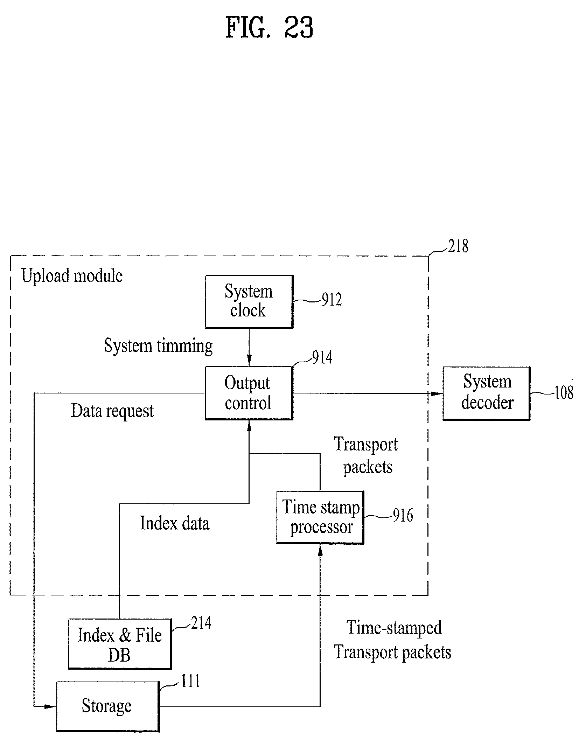

FIG. 23 is a block diagram illustrating an example of configuration of the upload module 218 included in the 3D PVR module of FIG. 2 according to the present invention

In FIG. 23, when content stored or recorded in the storage device 111 of the PVR is reproduced, the upload module 218 inputs transport packets input from the storage device 216 to the system decoder on timing such that PVR reproduction is possible.

In a case in which an input transport packet is a time stamped transport streams having a size of, for example, 192 bytes, the upload module 218 removes a time stamp of 4 bytes such that each packet having a size of 188 bytes that can be processed by the system decoder 108 and the video decoder 112 is input to the system decoder 108 on timing based on the removed time stamp.

Also, when trick play is requested, the upload module 218 may selectively receive proper transport packets based on index information, as shown in FIG. 18, extracted from the index and file database 214 and output the received transport packets to the system decoder 108.

Referring to FIG. 23, the upload module 218 according to the present invention may include a system clock part 23012, an output controller 23014, and a time stamp processor 23016.

The system clock part 23012 provides information regarding system clock to be referenced at the time of output control performed by the output controller 914, i.e. at the time of controlling corresponding transport packets.

The output controller 23014 receives index data from the index and file database 214 and requests data from the storage device 111. When requesting data from the storage device 111, the output controller 23014 may request data based on the received index data. The storage device 111 transmits corresponding transport packets to the time stamp processor 23016 according to the request of the output controller 23014. In this case, all of the transport packets output from the storage device 111 may be time stamped transport packets. Alternatively, only some of the transport packets output from the storage device 111 may be time stamped transport packets.

The time stamp processor 23016 removes a time stamp from input transport packets and directly outputs only transport packets having a size of 188 bytes to the output controller 23014 or the system decoder 108. Particularly in the latter case, the output controller 23014 may calculate system timing based on system clock of the system clock part 23012 to output a control signal to the time stamp processor 23016.

In the above, timing of transmission to the system decoder 108 refers to the removed time stamp. When system time output from the system clock part 23012 is read and a corresponding value coincides with a value of the time stamp, a corresponding transport packet is input to the system decoder 108.

For a transport packet having no time stamp, output timing may be calculated using a virtual time stamp value with reference to a bit rate input during recording. In this case, the virtual time stamp may be generated, for example, by the download module 212 in the 3D PVR module. Alternatively, an additional configuration element may be added to generate the virtual time stamp. In connection with this case, the upload module 218 may refer to the time stamp index with respect to the presence or absence of a time stamp, through which it is possible to know the length of each transport packet and the presence or absence of the time stamp.

Although a description was given without division in the above, the index information is basically used only during reproduction of trick play when the PVR is reproduced. In other words, the output controller 23014 of FIG. 23 does not always request data from the storage device 216 based on received index data. During normal reproduction, the output controller may request output of data which are not based on the index data. That is, in a case in which trick play is not reproduced, the output controller 23013 may not access the index and file database 214.

In a case in which trick play is carried out in the PVR module 110 of the digital receiver, software/middleware determines the number of pictures to be skipped according to an operation mode and selects pictures to be reproduced. For example, in a case in which 3 times speed fast forward is to be realized, the PVR module 110 may sequentially perform the operations indicated by the command chain for 3 times speed play shown in FIG. 21 to realize a corresponding operation.

In this case, the upload module 218 transmits data to the system decoder 108 and the video decoder 112 at normal speed during a reproduction process. However, input data are skipped data, and therefore, rapid times speed reproduction is possible. For example, on the assumption that an I picture has a cycle of 10 sheets, a rapid reproduction effect, such as a 10 times speed reproduction effect, may be achieved when trick play is carried out using only the I picture.

Hereinafter, a method of performing a PVR function according to various scenarios of the digital receiver based on the above description will be descried with reference to a flowchart.

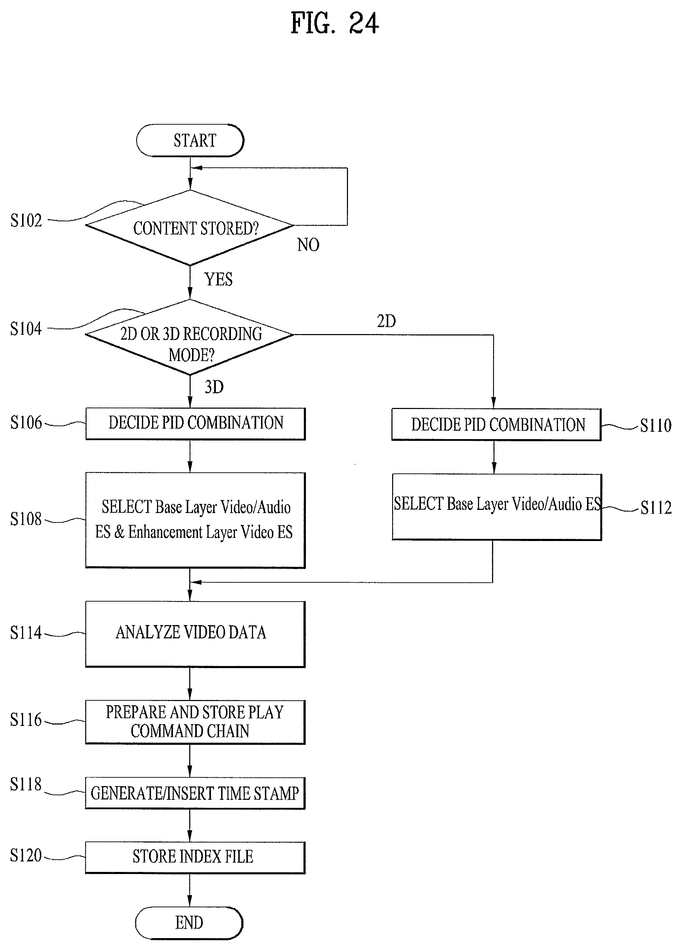

FIG. 24 is a flowchart illustrating an example of an operation of the receiver at the time of 2D/3D recording according to the present invention.

For example, FIG. 24 illustrates an operation of recording or storing a transport stream input in a 2D/3D mode in the digital receiver. A detailed description of steps carried out before a step of processing an initial transport stream by the system decoder 108 via the receiving part 102 and the VSB decoder 104 will be omitted since these steps are identical to those illustrated in the previously described drawings.

The system decoder 108 determines whether a PVR function execution request, i.e. a content storage command or request has been issued by a user (S102). Upon determining that the content storage command has not been issued by the user, the system decoder 108 processes an input transport stream and controls the processed transport stream to be output via the demultiplexer and the video decoder 112. The input transport stream may be properly processed with reference to the above description according to a 2D/3D mode and then output. For example, in a case in which the input transport stream is a 3D video stream, the transport stream is converted into a 3D output form by the formatter 115 and then displayed.

Upon determining at step S102 that content storage command has been issued by the user, the system decoder 108 determines whether a recording mode is a 2D/3D mode (S104). This is because it is necessary for the system decoder 108 to properly control the operation of the PVR module 110 according to a requested recording mode, and the operation of the PVR module 110 is different according to the recording mode as previously described.

Upon determining at step S104 that the recording mode is a 3D mode, it is necessary for the system decoder 108 to decide a PID combination such that a transport packet for a video elementary stream to be input to the PVR module 110 via the demultiplexer can be processed (S106).

At step S106, the system decoder 108 performs filtering with respect to PID streams to be input to the PVR module 110 according to the decided PID combination. That is, the system decoder 108 selects a base layer video/audio elementary stream and an enhancement layer video elementary stream from among transport packets input via the demultiplexer and controls the selected elementary streams to be input to the PVR module 110 (S108).

Upon determining at step S104 that the recording mode is a 2D mode, it is necessary for the system decoder 108 to decide a PID combination such that a transport packet for a video elementary stream to be input to the PVR module 110 via the demultiplexer can be processed (S110).

At step S106, the system decoder 108 performs filtering with respect to PID streams to be input to the PVR module 110 according to the decided PID combination. That is, the system decoder 108 selects a base layer video/audio elementary stream from among transport packets input via the demultiplexer and controls the selected elementary stream to be input to the PVR module 110 (S112).

After step S108 or S 112, the PVR module 110 analyzes video data for the input video elementary streams according to control of the system decoder 108 and stores related information.

An index extraction module of the download module 212 analyzes 3D PVR support information to check whether a corresponding packet is a start point of the I picture, is left/right, is a start point or an end point of a picture, or is a base layer or an enhancement layer (S 114).

In addition, the index extraction module checks a trick mode supported by the corresponding packet to prepare a play command chain for each mode to support trick play corresponding to each mode and to store the prepared play command chain (S 116). At this time, trick play command chain information may be independently managed with respect to 2D and 3D.

Also, the download module 212 uses the point of time when each input transport packet is input to the system decoder 108, i.e. system time, as system clock and designates the corresponding point of time as a time stamp and inserts the time stamp into the transport packet (S118). The PVR module 110 may generate and insert a time stamp for the transport packet according to the methods as shown in FIGs. 14 to 17 based on the analysis result of the video data performed at step S 114 and store the time stamp in the storage device 111. Alternatively, before step S 114, i.e. after step S108, it may be executed separately from the index file generation step. Particularly in a case in which an adaptive time stamp is used, discontinuity of the transport packets may be determined, and decision and control may be performed such that a time stamp is inserted based on the determination result.

Also, the PVR module 110 generates an index file using the same method as shown in FIG. 18 such that trick play, which is one of the PVR functions, is reproduced after or at step S116 and stores the generated index file in the index and file database 214 (S120).

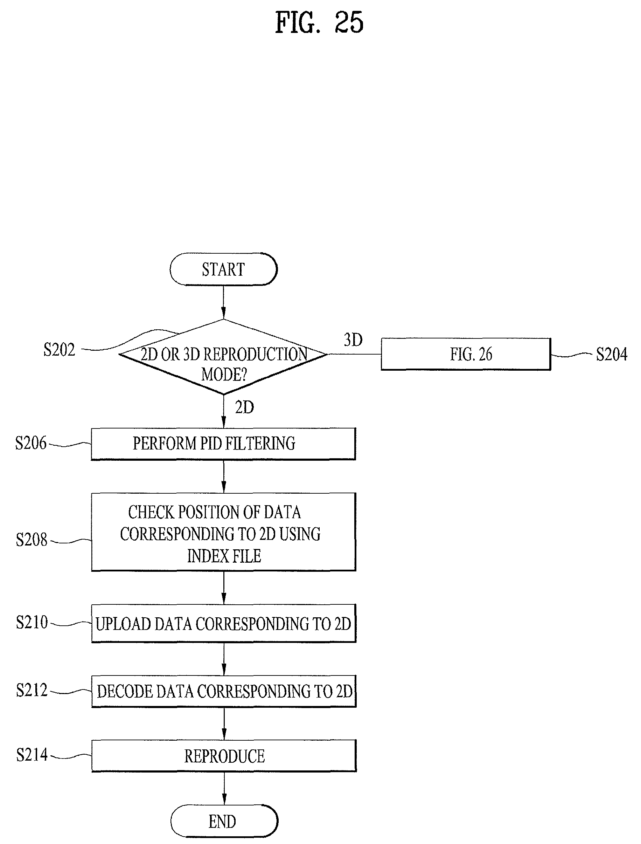

FIG. 25 is a flowchart illustrating an example of an operation of the receiver at the time of 2D mode reproduction according to the present invention.

For example, FIG. 25 illustrates an operation of reproducing stored content to perform the PVR function as shown in FIG. 24. The stored content may be 2D content or 3D content.

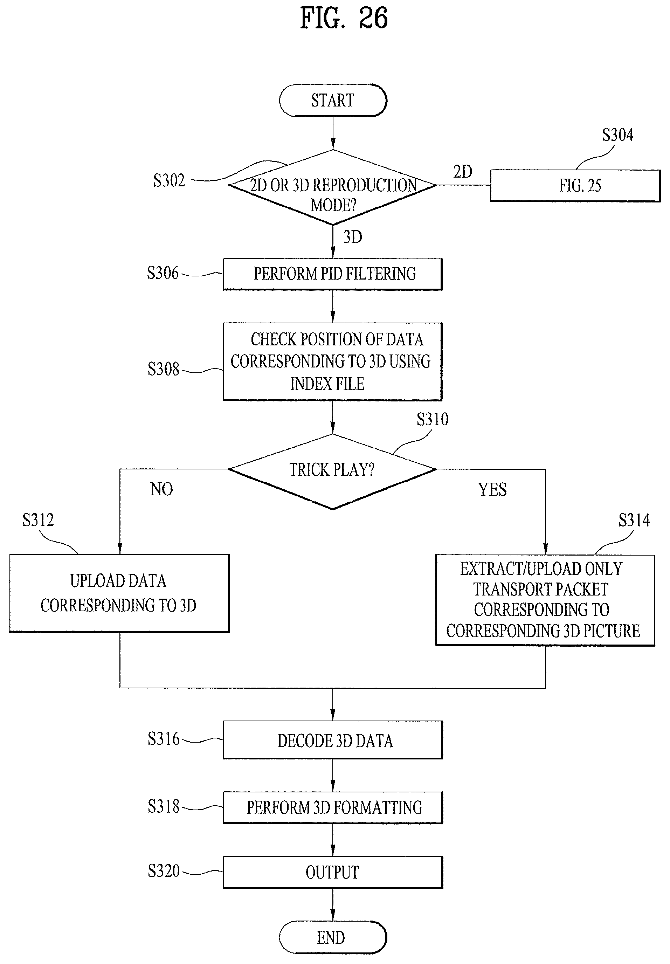

The upload module 218 determines whether a reproduction mode is a 2D or 3D mode (S202). Upon determining that the reproduction mode is a 3D mode, this will hereinafter be described with reference to FIG. 26 (S204).

In other words, upon determining that the reproduction mode is a 2D mode, the upload module 218 performs PID filtering to input PID streams corresponding to video elementary streams to be uploaded to the system decoder 108 (S206).

Also, the upload module 218 reads an index file from the index and file database 214 to control upload of video elementary streams to be reproduced and determines a position of data corresponding to 2D in the storage device 111 based on the read index file (S208). That is, in a dual stream, only a base layer elementary stream is received, and a video elementary stream corresponding to an enhancement layer video elementary stream is skipped. In normal times speed reproduction, on the other hand, 2D mode reproduction with the enhancement layer omitted is possible without difficulty by the PID filtering of the subsequent stage (the demultiplexer 108) although the enhancement layer is not skipped.

The upload module 218 uploads 2D data according system timing. In a case in which trick play is selected, only data corresponding to 2D are output from the upload module 218 to the system decoder 108 in order to guarantee normal operations of the system decoder 108 and the video decoder 112. In addition, the trick play is performed using trick play chain information checked during the recording process. For example, in case of 2 times speed 2D reproduction, the trick play is performed using only data belonging to a play command chain previously stored to this end (S210).

The data corresponding to 2D are decoded through the system decoder/demultiplexer 108 and the video decoder 112 (S212), and video reproduction is carried out (S214).

FIG. 26 is a flowchart illustrating an example of an operation of the receiver at the time of 3D mode reproduction according to the present invention.

FIG. 26 shows an operation of the receiver at the time of 3D mode reproduction unlike Fig. 25. FIG. 26 corresponds to a case in which the reproduction mode is a 3D mode as the result of determination at step S202.

That is, the upload module 218 determines whether the reproduction mode is a 2D or 3D mode (S302). Upon determining that the reproduction mode is a 2D mode, this was described with reference to FIG. 25 (S304).

On the other hand, upon determining that the reproduction mode is a 3D mode, the upload module 218 performs PID filtering to input PID streams corresponding to video elementary streams to be uploaded to the system decoder 108 (S306).

Also, the upload module 218 reads an index file from the index and file database 214 to control upload of video elementary streams to be reproduced and determines a position of data corresponding to 3D in the storage device 216 based on the read index file (S308).

After step S308 is carried out, the upload module 218 determines whether the reproduction of trick play has been requested (S310).

Upon determining at step S310 that the reproduction of trick play has not been requested, the upload module 218 uploads all video elementary streams downloaded at the time of 3D mode storage based on the determined position of the 3D data (S312).

On the other hand, upon determining at step S310 that the reproduction of trick play has been requested, the upload module 218 extracts and uploads only transport packets corresponding to a 3D I picture. In this case, the transport stream packets corresponding to the 3D I picture are output to the system decoder (S314). Corresponding base and enhancement layer video data designated as the I picture are uploaded, the I picture of the base and enhancement layer is decoded (S316) and mode converted by the formatter, and the video is finally output (S318).

In the above description, the I picture is used to realize 3D mode trick play as an embodiment of the present invention. However, the technical idea of the present invention is not limited only to the I picture. For example, the present invention relates to rapid and accurate realization of 3D PVR functions with respect to 3D streams transmitted as dual streams in the digital receiver. To this end, a trick play chain is used in this specification. It is sufficient to designate a picture to configure the trick play chain using a flag corresponding to corresponding time speed, and it is not necessary to configure the trick play chain using only an I picture. That is, the trick play chain may be configured using a picture partially different from the I picture or another picture without configuration of the trick play chain using only the I picture. Also, it is not necessary to equally configure the trick play chain at the respective times speed modes, and pictures constituting trick play chain configured at the respective times speed modes may be different from each other. The 3D formatted 3D data are output (S320).

The trick play is performed using trick play chain information checked during recording. For example, in case of 2 times speed 3D reproduction, the trick play is performed using only data belonging to the trick play chain therefor.

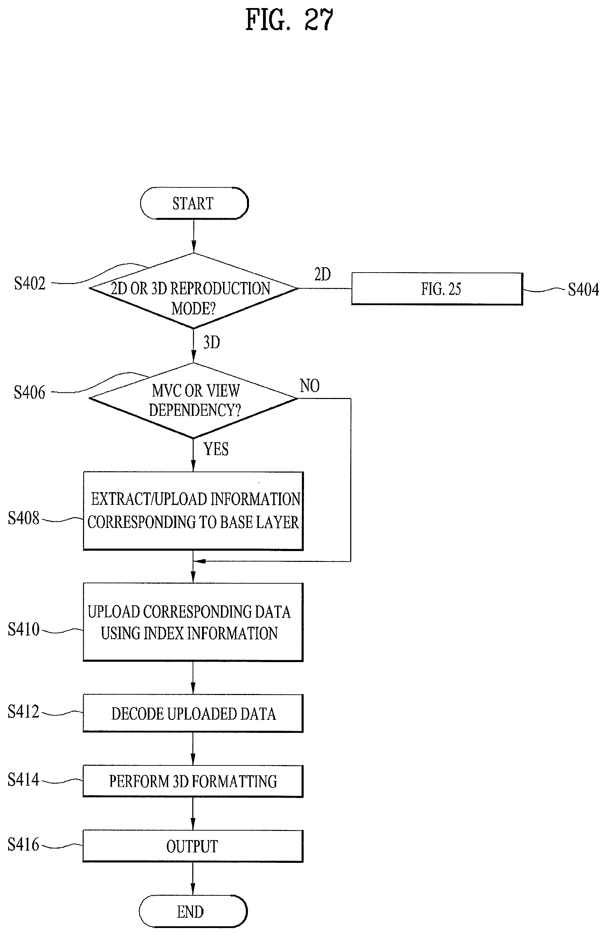

FIG. 27 is a flowchart illustrating an example of an operation of the receiver at the time of view switching request according to the present invention.

FIG. 27 shows a case in which left and right switching is requested during reproduction.

The upload module 218 determines a reproduction mode (S402). Upon determining that the reproduction mode is a 2D mode, the description of FIG. 25 is referred to (S404). On the other hand, upon determining that the reproduction mode is a 3D mode, the upload module 218 determines whether MVC or view dependency is present (S406). This is because in a case in which the MVC or the view dependency is present, it is necessary for the upload module 218 to upload even information related to a base layer (S408).

After step S408 is carried out, the upload module 218 uploads corresponding data using index information (S410).

The system decoder/demultiplexer 108 and the video decoder 112 decode the uploaded data corresponding to 3D (S412), and the formatter 116 performs 3D formatting with respect to the decoded data according to an output format (S414).

The 3D formatted 3D data are output (S416).

During the decoding process, both left and right views are processed, but only a selected view is output during the final outputting process. Although not shown, a desired view may be selected in the digital receiver before the decoding process or the final outputting process.

### [Mode for Invention]

Various embodiments have been described in the best mode for carrying out the invention.

According to the present invention as described above, the digital receiver may provide various PVR functions for even 3D content, support effective PVR functions for even 3D streams to realize Full Resolution Per Eye, and smoothly perform trick play and 2D/3D switching with respect to 3D content using the PVR.

In addition, the drawings were individually described for the convenience of description; however, the embodiments described in the respective drawings may be combined to realize a new embodiment. Also, designing recording media that can be read in a computer, in which programs to perform the previous embodiments are installed, according to needs of those skilled in the art falls within a right scope.

Also, the display device according to the present invention and the operation method thereof may not be limitedly applied to the construction and method of the embodiments as previously described; however, all or some of the embodiments may be selectively combined to achieve various modifications.

Meanwhile, the operation method of the display device according to the present invention may be realized as a code, which is readable by a processor included in the display device, in recording media readable by the processor. The recording media readable by the processor includes all kinds of recording devices to store data which are readable by the processor. Examples of the recording media readable by the processor may include a read only memory (ROM), a random access memory (RAM), a compact disc read only memory (CD-ROM), a magnetic tape, a floppy disk, and an optical data storage device. In addition, the recording media readable by the processor may also be realized in the form of a carrier wave, such as transmission through the Internet. Also, the recording media readable by the processor may be distributed to computer systems connected to each other through a network such that a code readable by the processor is stored or executed in a distribution mode.

It will be apparent to those skilled in the art that various modifications and variations can be made in the present invention without departing from the scope of the appended claims. Thus, it is intended that the present invention covers the modifications and variations of this invention provided they come within the scope of the appended claims. Such modifications and variations should not be individually understood from technical idea or prospects of the present invention.

Also, both an article invention and a method invention are described in this specification, and a description of the article invention and a description of the method invention may be supplementarily applied as necessary.

### [Industrial Applicability]

The present invention relates to a method of processing 3D content in a digital receiver including a PVR device to receive and store a 3D signal. The present invention is usable in all fields related to the digital receiver. Consequently, the present invention has industrial applicability.

## Claims

1. A method of processing a digital broadcast signal for a 3-dimensional, 3D, service, the method comprising:
receiving a 3D video elementary stream and system information comprising 3D personal video recorder, PVR, support information of the 3D video elementary stream;
adaptively adding a time stamp to one or more transport packets of the 3D video elementary stream,
wherein a time stamp index indicates whether or not the time stamp is inserted into a transport packet, and
storing the 3D video elementary stream having the time stamp or stamps and the time stamp index added thereto;
storing an index file comprising information for execution of a 3D PVR function of the 3D video elementary stream extracted from the 3D PVR support information;
decoding the stored 3D video elementary stream based on the index file, the time stamp index and the adaptively added time stamp or stamps; and
formatting the decoded 3D video elementary stream according to an output format and outputting the formatted 3D video elementary stream.

2. The method according to claim 1, wherein the index file comprises at least one selected from among picture type information indicating a Left/Right, a base/enhancement layer and a random access point, RAP, of a corresponding packet, picture number information regarding picture numbers, address information indicating a logical or physical address in a storage device, and size information indicating size of a corresponding picture.

3. The method according to claim 2, wherein the 3D video elementary stream is a dual video stream comprising a base layer video stream and an enhancement layer video stream, wherein the 3D PVR support information is contained in an adaptation_field of a transport packet comprising a first byte or a last byte of each picture among the transport packets corresponding to a 3D or 2D program, and wherein the 3D PVR support information is transmitted through a private data byte of the adaptation_field.

4. The method according to claim 3, wherein the 3D PVR support information comprises at least one selected from among information indicating whether a corresponding transport packet comprises a start point or an end point of each video picture, information indicating whether a video elementary stream contained in the corresponding transport packet is an RAP, information indicating whether a corresponding picture is a base layer or an enhancement layer in connection with a coding mode, and information indicating whether the corresponding picture is a left view or a right view.

5. The method according to claim 4, wherein the 3D PVR support information further comprises frame information indicating numbers sequentially assigned to pictures of a program on the basis of a first picture of the program and frame type information identifying whether the frame information is based on decoding order or display order.

6. The method according to claim 5, wherein the frame information comprises picture pairs, numbers of which are independently assigned for a base/extended layer and left/right and which have the same numbers for the base/extended layer and the left/right.

7. The method according to claim 6, wherein the 3D PVR support information further comprises times speed information indicating whether or not the corresponding picture is used for fast play support, and the times speed information comprises information indicating whether 2D normal times speed reproduction using a corresponding picture is possible, information indicating whether 3D normal times speed reproduction using a corresponding picture is possible, information indicating whether n times speed reproduction using a corresponding picture in a 2D mode is possible, and information indicating whether n times speed reproduction using a corresponding picture in a 3D mode is possible.

8. The method according to claim 3, wherein the system information further comprises identification information identifying whether the 3D PVR support information is present, and the identification information is transmitted while being contained in any one selected from among a program map table, PMT, of program specific information, PSI, and a service description table, SDT, and EIT of digital video broadcasting, DVB.

9. A digital receiver for a three-dimensional, 3D, service comprising:
a receiving part (102) configured to receive a 3D video elementary stream and system information comprising 3D personal video recorder, PVR, support information of the 3D video elementary stream;
a PVR module (110) comprising a download module (212) to adaptively add a time stamp to one or more transport packets of the 3D video elementary stream, wherein a time stamp index indicates whether or not the time stamp is inserted into a transport packet, and control an index file comprising information for execution of a 3D PVR function of the 3D video elementary stream extracted from the 3D PVR support information to be configured and stored and an upload module (218) to upload the stored 3D video elementary stream;
a decoder (112) configured to decode the uploaded 3D video elementary stream based on the index file, the time stamp index and the adaptively added time stamp or stamps;
a formatter (116) configured to format the decoded 3D video elementary stream according to an output format; and
an output part configured to output the formatted 3D video elementary stream.

10. The digital receiver according to claim 9, wherein the index file of the PVR module comprises at least one selected from among picture type information indicating a Left/Right, a base/enhancement layer and a random access point, RAP, of a corresponding packet picture number information regarding picture numbers, address information indicating a logical or physical address in a storage device, and size information indicating size of a corresponding picture.

11. The digital receiver according to claim 10, wherein the 3D video elementary stream is a dual video stream comprising a base layer video stream and an enhancement layer video stream, wherein the 3D PVR support information is contained in an adaptation_field of a transport packet comprising a first byte or a last byte of each picture among the transport packets corresponding to a 3D or 2D program, and wherein the 3D PVR support information is transmitted through a private data byte of the adaptation_field.

12. The digital receiver according to claim 11, wherein the 3D PVR support information comprises at least one selected from among information indicating whether a corresponding transport packet comprises a start point or an end point of each video picture, information indicating whether a video elementary stream contained in the corresponding transport packet is an RAP, information indicating whether a corresponding picture is a base layer or an enhancement layer in connection with a coding mode, and information indicating whether the corresponding picture is a left view or a right view.

13. The digital receiver according to claim 12, wherein the 3D PVR support information further comprises frame information indicating numbers sequentially assigned to pictures of a program on the basis of a first picture of the program and frame type information identifying whether the frame information is based on decoding order or display order.

14. The digital receiver according to claim 13, wherein the frame information comprises picture pairs, numbers of which are independently assigned for a base/extended layer and left/right and which have the same numbers for the base/extended layer and the left/right.

15. The digital receiver according to claim 14, wherein the 3D PVR support information further comprises times speed information indicating whether or not the corresponding picture is used for fast play support, and the times speed information comprises information indicating whether 2D normal times speed reproduction using a corresponding picture is possible, information indicating whether 3D normal times speed reproduction using a corresponding picture is possible, information indicating whether n times speed reproduction using a corresponding picture in a 2D mode is possible, and information indicating whether n times speed reproduction using a corresponding picture in a 3D mode is possible.

## Patentansprüche

1. Verfahren zur Verarbeitung eines digitalen Rundfunksignals für einen dreidimensionalen, 3D, Dienst, wobei das Verfahren umfasst:
Empfangen eines 3D-Videoelementarstroms sowie von Systeminformation umfassend 3D-Personalvideorekorder-, PVR, Unterstützungsinformation des 3D-Videoelementarstrosms,
adaptives Hinzufügen eines Zeitstempels zu einem oder mehreren Transportpaketen des 3D-Videoelementarstroms,
wobei ein Zeitstempelindex angibt, ob der Zeitstempel in ein Transportpaket eingefügt ist oder nicht, und
Speichern des 3D-Videoelementarstroms, zu welchem der Zeitstempel oder die Zeitstempel sowie der Zeitstempelindex hinzugefügt wurden,
Speichern einer Indexdatei umfassend Information zur Ausführung einer 3D PCR-Funktion des 3D-Videoelementarstroms, extrahiert aus der 3D PVR-Unterstützungsinformation,
Dekodieren des gespeicherten 3D-Videoelementarstroms basierend auf der Indexdatei, dem Zeitstempelindex und dem adaptiv hinzugefügten Zeitstempel oder den Zeitstempeln, und
Formatieren des dekodierten 3D-Videoelementarstroms nach Maßgabe eines Ausgabeformats und Ausgeben des formatierten 3D-Videoelementarstroms.

2. Verfahren nach Anspruch 1, wobei die Indexdatei mindestens eines gewählt unter Bildtypinformation, welche links/rechts, eine Basis-/Erweiterungsschicht und einen Zufallszugangspunkt, RAP, eines entsprechenden Pakets angibt, Bildzahlinformation betreffend Bildzahlen, Adressinformation, welche eine logische oder physikalische Adresse in einer Speichervorrichtung angibt, und Größeninformation, welche eine Größe eines entsprechenden Bilds angibt, umfasst.

3. Verfahren nach Anspruch 2, wobei der 3D-Videoelementarstrom ein Dual-Videostrom mit einem Basisschicht-Videostrom und einem Erweiterungsschicht-Videostrom ist, wobei die 3D PVR-Unterstützungsinformation in einem Adaptionsfeld eines Transportpakets enthalten ist, welches ein erstes Byte oder ein letztes Byte jedes Bilds umfasst, unter den Transportpaketen, die einem 3D- oder 2D-Programm entsprechen, und wobei die 3D PVR-Unterstützungsinformation über ein Privatdatenbyte des Adaptionsfelds übertragen wird.

4. Verfahren nach Anspruch 3, wobei die 3D PVR-Unterstützungsinformation mindestens eines gewählt unter Information, welche angibt, ob ein entsprechendes Transportpaket einen Startpunkt oder einen Endpunkt jedes Videobilds umfasst, Information, welche angibt, ob ein in dem entsprechenden Transportpaket enthaltener Videoelementarstrom ein RAP ist, Information, welche angibt, ob ein entsprechendes Bild eine Basisschicht oder eine Erweiterungsschicht in Verbindung mit einem Kodierungsmodus ist, und Information, welche angibt, ob das entsprechende Bild eine linke Ansicht oder eine rechte Ansicht ist, umfasst.

5. Verfahren nach Anspruch 4, wobei die 3D PVR-Unterstützungsinformation ferner Rahmeninformation, welche Zahlen angibt, die Bildern eines Programms auf der Basis eines ersten Bilds des Programms sequenziell zugewiesen sind, und Rahmentypinformation umfasst, welche identifiziert, ob die Rahmeninformation auf einer Dekodierungsreihenfolge oder einer Anzeigereihenfolge beruht.

6. Verfahren nach Anspruch 5, wobei die Rahmeninformation Bildpaare umfasst, deren Zahlen unabhängig zugewiesen sind für eine Basis-/Erweiterungsschicht und links/rechts und welche die gleichen Zahlen für die Basis-/Erweiterungsschicht und links/rechts haben.

7. Verfahren nach Anspruch 6, wobei die 3D PVR-Unterstützungsinformation ferner Mehrfachgeschwindigkeitsinformation umfasst, welche angibt, ob das entsprechende Bild für eine Schnellwiedergabeunterstützung verwendet wird, und wobei die Mehrfachgeschwindigkeitsinformation Information umfasst, welche angibt, ob eine 2D-Normalgeschwindigkeitsreproduktion unter Verwendung eines entsprechenden Bilds möglich ist, Information, die angibt, ob eine 3D-Normalgeschwindigkeitsreproduktion unter Verwendung eines entsprechenden Bilds möglich ist, Information, die angibt, ob eine Reproduktion mit n-facher Geschwindigkeit unter Verwendung eines entsprechenden Bilds in einem 2D-Modus möglich ist, und Information, die angibt, ob eine Reproduktion mit n-facher Geschwindigkeit unter Verwendung eines entsprechenden Bilds in einem 3D-Modus möglich ist.

8. Verfahren nach Anspruch 3, wobei die Systeminformation ferner Identifizierungsinformation umfasst, welche identifiziert, ob die 3D PVR-Unterstützungsinformation vorhanden ist und wobei die Identifizierungsinformation übertragen wird, während sie enthalten ist in irgendeinem gewählt unter einer Programmkartentabelle, PMT, von programmspezifischer Information, PSI, und einer Dienstbeschreibungstabelle, SDT, und EIT von digitalem Videorundfunk, DVB.

9. Digitalempfänger für einen dreidimensionalen, 3D, Dienst umfassend:
einen Empfangsteil (102), welcher dazu eingerichtet ist, einen 3D-Videoelementarstrom und Systeminformation zu empfangen, welche 3D-Personalvideorekorder-, PVR, Unterstützungsinformation des 3D-Videoelementarstroms umfasst,
ein PVR-Modul (110) welches ein Download-Modul (212) umfasst, um einen Zeitstempel zu einem oder mehreren Transportpaketen des 3D-Videoelementarstroms adaptiv hinzuzufügen, wobei ein Zeitstempelindex angibt, ob der Zeitstempel in ein Transportpaket eingefügt ist oder nicht, und um die Konfiguration und Speicherung einer Indexdatei zu steuern, welche Information zur Ausführung einer 3D PVR-Funktion des 3D-Videoelementarstroms umfasst, extrahiert aus der 3D PVR-Unterstützungsinformation, sowie ein Upload-Modul (218), um den gespeicherten 3D-Videoelementarstrom hochzuladen,
einen Dekodierer (112), welcher dazu eingerichtet ist, den hochgeladenen 3D-Videoelementarstrom basierend auf der Indexdatei, dem Zeitstempelindex und dem adaptiv hinzugefügten Zeitstempel oder den Zeitstempeln zu dekodieren,
einen Formatierer (116), welcher dazu eingerichtet ist, den dekodierten 3D-Videoelementarstrom nach Maßgabe eines Ausgabeformats zu formatieren, und
einen Ausgabeteil, welcher dazu eingerichtet ist, den formatierten 3D-Videoelementarstrom auszugeben.

10. Digitalempfänger nach Anspruch 9, wobei die Indexdatei mindestens eines gewählt unter Bildtypinformation, welche links/rechts, eine Basis-/Erweiterungsschicht und einen Zufallszugangspunkt, RAP, eines entsprechenden Pakets angibt, Bildzahlinformation betreffend Bildzahlen, Adressinformation, welche eine logische oder physikalische Adresse in einer Speichervorrichtung angibt, und Größeninformation, welche eine Größe eines entsprechenden Bilds angibt, umfasst.

11. Digitalempfänger nach Anspruch 10, wobei die 3D PVR-Unterstützungsinformation mindestens eins gewählt unter Information, welche angibt, ob ein entsprechendes Transportpaket einen Startpunkt oder einen Endpunkt jedes Videobilds umfasst, Information, welche angibt, ob ein in dem entsprechenden Transportpaket enthaltener Videoelementarstrom ein RAP ist, Information, welche angibt, ob ein entsprechendes Bild eine Basisschicht oder eine Erweiterungsschicht in Verbindung mit einem Kodierungsmodus ist, und Information, welche angibt, ob das entsprechende Bild eine linke Ansicht oder eine rechte Ansicht ist, umfasst.

12. Digitalempfänger nach Anspruch 11, wobei die 3D PVR-Unterstützungsinformation mindestens eines gewählt unter Information, welche angibt, ob ein entsprechendes Transportpaket einen Startpunkt oder einen Endpunkt jedes Videobilds umfasst, Information, welche angibt, ob ein in dem entsprechenden Transportpaket enthaltener Videoelementarstrom ein RAP ist, Information, welche angibt, ob ein entsprechendes Bild eine Basisschicht oder eine Erweiterungsschicht in Verbindung mit einem Kodierungsmodus ist, und Information, welche angibt, ob das entsprechende Bild eine linke Ansicht oder eine rechte Ansicht ist, umfasst.

13. Digitalempfänger nach Anspruch 12, wobei die 3D PVR-Unterstützungsinformation ferner Rahmeninformation, welche Zahlen angibt, die Bildern eines Programms auf der Basis eines ersten Bilds des Programms sequenziell zugewiesen sind, und Rahmentypinformation umfasst, welche identifiziert, ob die Rahmeninformation auf einer Dekodierungsreihenfolge oder einer Anzeigereihenfolge beruht.

14. Digitalempfänger nach Anspruch 13, wobei die Rahmeninformation Bildpaare umfasst, deren Zahlen unabhängig zugewiesen sind für eine Basis-/Erweiterungsschicht und links/rechts und welche die gleichen Zahlen für die Basis-/Erweiterungsschicht und links/rechts haben.

15. Digitalempfänger nach Anspruch 14, wobei die 3D PVR-Unterstützungsinformation ferner Mehrfachgeschwindigkeitsinformation umfasst, welche angibt, ob das entsprechende Bild für eine Schnellwiedergabeunterstützung verwendet wird, und wobei die Mehrfachgeschwindigkeitsinformation Information umfasst, welche angibt, ob eine 2D-Normalgeschwindigkeitsreproduktion unter Verwendung eines entsprechenden Bilds möglich ist, Information, die angibt, ob eine 3D-Normalgeschwindigkeitsreproduktion unter Verwendung eines entsprechenden Bilds möglich ist, Information, die angibt, ob eine Reproduktion mit n-facher Geschwindigkeit unter Verwendung eines entsprechenden Bilds in einem 2D-Modus möglich ist, und Information, die angibt, ob eine Reproduktion mit n-facher Geschwindigkeit unter Verwendung eines entsprechenden Bilds in einem 3D-Modus möglich ist.

## Revendications

1. Procédé de traitement d'un signal de diffusion numérique destiné à un service tridimensionnel, 3D, le procédé comprenant :
la réception d'un flux élémentaire vidéo 3D et d'informations de système comprenant des informations de support d'un enregistreur vidéo personnel, PVR, 3D, du flux élémentaire vidéo 3D ;
l'ajout de manière adaptative d'une estampille temporelle à un ou plusieurs paquets de transport du flux élémentaire vidéo 3D,
dans lequel un indice d'estampille temporelle indique si l'estampille temporelle est insérée ou non dans un paquet de transport, et
le stockage du flux élémentaire vidéo 3D auquel la ou les estampille(s) temporelle(s) et l'indice d'estampille temporelle sont ajoutés ;
le stockage d'un fichier d'indices comprenant des informations pour l'exécution d'une fonction PVR 3D du flux élémentaire vidéo 3D extrait à partir des informations de support PVR 3D ;
le décodage du flux élémentaire vidéo 3D stocké sur la base du fichier d'indices, de l'indice d'estampille temporelle et de la ou des estampille(s) temporelle(s) ajoutée(s) de manière adaptative ; et
le formatage du flux élémentaire vidéo 3D décodé en fonction d'un format de sortie et la sortie du flux élémentaire vidéo 3D formaté.

2. Procédé selon la revendication 1, dans lequel le fichier d'indices comprend au moins un élément sélectionné parmi des informations de type images indiquant une couche gauche/droite, de base/d'amélioration, un point d'accès aléatoire, RAP, d'un paquet correspondant, des informations de numéros d'images concernant des numéros d'images, des informations d'adresse indiquant une adresse logique ou physique dans un dispositif de stockage, et des informations de taille indiquant une taille d'une image correspondante.

3. Procédé selon la revendication 2, dans lequel le flux élémentaire vidéo 3D est un flux vidéo double comprenant un flux vidéo de couche de base et un flux vidéo de couche d'amélioration, dans lequel les informations de support PVR 3D sont contenues dans un champ adaptation_field d'un paquet de transport comprenant un premier octet ou un dernier octet de chaque image parmi les paquets de transport correspondant à un programme 2D ou 3D, et dans lequel les informations de support PVR 3D sont transmises à travers un octet de données privées du champ adaptation_field.

4. Procédé selon la revendication 3, dans lequel les informations de support PVR 3D comprennent au moins un élément sélectionné parmi des informations indiquant si un paquet de transport correspondant comprend un point de départ ou un point de fin de chaque image vidéo, des informations indiquant si un flux élémentaire vidéo contenu dans le paquet de transport correspondant est un RAP, des informations indiquant si une image correspondante est une couche de base ou une couche d'amélioration par rapport à un mode de codage, et des informations indiquant si l'image correspondante est une vue de gauche ou une vue de droite.

5. Procédé selon la revendication 4, dans lequel les informations de support PVR 3D comprennent en outre des informations de trame indiquant des numéros attribués de manière séquentielle aux images d'un programme sur la base d'une première image du programme et des informations de type de trame identifiant si les informations de trame sont basées sur un ordre de décodage ou un ordre d'affichage.

6. Procédé selon la revendication 5, dans lequel les informations de trame comprennent des paires d'images, dont les numéros sont attribués indépendamment à une couche de base/étendue et gauche/droite et qui ont les mêmes numéros pour la couche de base/étendue et la gauche/droite.

7. Procédé selon la revendication 6, dans lequel les informations de support PVR 3D comprennent en outre des informations de vitesse de temps indiquant si l'image correspondante est utilisée ou non pour un support de lecture rapide, et les informations de vitesse de temps comprennent des informations indiquant si la reproduction de vitesse de temps normale 2D utilisant une image correspondante est possible, des informations indiquant si une reproduction de vitesse de temps normale 3D utilisant une image correspondante est possible, des informations indiquant si une reproduction de vitesse de temps n utilisant une image correspondante dans un mode 2D est possible, et des informations indiquant si une reproduction de vitesse de temps n utilisant une image correspondante dans un mode 3D est possible.

8. Procédé selon la revendication 3, dans lequel les informations de système comprennent en outre des informations d'identification identifiant si les informations de support PVR 3D sont présentes, et les informations d'identification sont transmises tout en étant contenues dans l'un quelconque d'un élément sélectionné parmi une table de mappage de programmes, PMT, d'informations spécifiques de programmes, PSI, et une table de description de services, SDT, et un EIT de diffusion vidéo numérique, DVB.

9. Récepteur numérique destiné à un service tridimensionnel, 3D, comprenant :
une partie de réception (102) configurée pour recevoir un flux élémentaire vidéo 3D et des informations de système comprenant des informations de support d'un enregistreur vidéo personnel, PVR, 3D, du flux élémentaire vidéo 3D ;
un module PVR (110) comprenant un module de téléchargement vers l'aval (212) pour ajouter de manière adaptative une estampille temporelle à un ou plusieurs paquets de transport du flux élémentaire vidéo 3D, dans lequel un indice d'estampille temporelle indique si l'estampille temporelle est insérée ou non dans un paquet de transport, et pour commander un fichier d'indices comprenant des informations pour l'exécution d'une fonction PVR 3D du flux élémentaire vidéo 3D extrait des informations de support PVR 3D à configurer et stocker, et un module de téléchargement vers l'amont (218) pour télécharger vers l'amont le flux élémentaire vidéo 3D stocké ;
un décodeur (112) configuré pour décoder le flux élémentaire vidéo 3D téléchargé vers l'amont sur la base du fichier d'indices, de l'indice d'estampille temporelle, et de la ou des estampille(s) temporelle(s) ajoutée(s) de manière adaptative ;
un dispositif de formatage (116) configuré pour formater le flux élémentaire vidéo 3D décodé en fonction d'un format de sortie ; et
une partie de sortie configurée pour délivrer en sortie le flux élémentaire vidéo 3D formaté.

10. Récepteur numérique selon la revendication 9, dans lequel le fichier d'indices du module PVR comprend au moins un élément sélectionné parmi des informations de type images indiquant une couche gauche/droite, de base/d'amélioration et un point d'accès aléatoire, RAP, d'un paquet correspondant, des informations de numéros d'images concernant des numéros d'images, des informations d'adresse indiquant une adresse logique ou physique dans un dispositif de stockage et des informations de taille indiquant une taille d'une image correspondante.

11. Récepteur numérique selon la revendication 10, dans lequel le flux élémentaire vidéo 3D est un flux vidéo double comprenant un flux vidéo de couche de base et un flux vidéo de couche d'amélioration, dans lequel les informations de support PVR 3D sont contenues dans un champ adaptation_field d'un paquet de transport comprenant un premier octet ou un dernier octet de chaque image parmi les paquets de transport correspondant à un programme 2D ou 3D, et dans lequel les informations de support PVR 3D sont transmises à travers un octet de données privées duchamp adaptation_field.

12. Récepteur numérique selon la revendication 11, dans lequel les informations de support PVR 3D comprennent au moins un élément sélectionné parmi des informations indiquant si un paquet de transport correspondant comprend un point de départ ou un point de fin de chaque image vidéo, des informations indiquant si un flux élémentaire vidéo contenu dans le paquet de transport correspondant est un RAP, des informations indiquant si une image correspondante est une couche de base ou une couche d'amélioration par rapport à un mode de codage, et des informations indiquant si l'image correspondante est une vue de gauche ou une vue de droite.

13. Récepteur numérique selon la revendication 12, dans lequel les informations de support PVR 3D comprennent en outre des informations de trame indiquant des numéros attribués de manière séquentielle aux images d'un programme sur la base d'une première image du programme et des informations de type de trame identifiant si les informations de trame sont basées sur un ordre de décodage ou un ordre d'affichage.

14. Récepteur numérique selon la revendication 13, dans lequel les informations de trame comprennent des paires d'images, dont les numéros sont attribués indépendamment à une couche de base/étendue et gauche/droite et qui ont les mêmes numéros pour la couche de base/étendue et la gauche/droite.

15. Récepteur numérique selon la revendication 14, dans lequel les informations de support PVR 3D comprennent en outre des informations de vitesse de temps indiquant si l'image correspondante est utilisée ou non pour un support de lecture rapide, et les informations de vitesse de temps comprennent des informations indiquant si la reproduction de vitesse de temps normale 2D utilisant une image correspondante est possible, des informations indiquant si une reproduction de vitesse de temps normale 3D utilisant une image correspondante est possible, des informations indiquant si une reproduction de vitesse de temps n utilisant une image correspondante dans un mode 2D est possible, et des informations indiquant si une reproduction de vitesse de temps n utilisant une image correspondante dans un mode 3D est possible.
